# EUROPEAN PATENT SPECIFICATION

(11) **EP 2 606 529 B1**
(45) Date of publication and mention of the grant of the patent: **23.11.2022**
(21) Application number: 11761419.8
(22) Date of filing: 18.08.2011
(51) Int. Cl.: H01M 8/18, H01M 8/22, H01M 10/052

(54) **ELECTROCHEMICAL CELL**
ELEKTROCHEMISCHE ZELLE
CELLULE ELECTROCHIMIQUE

(30) Priority: 16.12.2010 US 424021 P; 18.08.2010 US 374934 P
(43) Date of publication of application: 26.06.2013
(73) Proprietor: Massachusetts Institute of Technology, Cambridge, MA 02139 (US)
(72) Inventor: CHIANG, Yet-ming, Framingham MA 01701 (US); CARTER, W. Craig, Jamaica Plain MA 02130 (US); DUDUTA, Mihai, Cambridge MA 02139 (US); HO, Bryan, Y., Cambridge MA 02139 (US)
(74) Representative: Hoffmann Eitle
(86) International application number: PCT/US2011/048266
(87) International publication number: WO 2012/024499

(56) References cited:
- WO-A1-2009/151639
- US-A- 4 431 718
- US-A- 5 558 961
- US-B1- 6 689 507

## Description

### TECHNICAL FIELD

Energy generation using electrochemical energy generation devices comprising at least one stationary, fluid redox electrode is generally described.

### BACKGROUND

An electrochemical cell stores electrochemical energy by separating an ion source and an ion sink at differing ion electrochemical potentials. A difference in electrochemical potential produces a voltage difference between the positive and negative electrodes, which can be used to produce an electric current if the electrodes are connected by a conductive element. A rechargeable battery can be recharged by application of an opposing voltage difference that drives electronic current and ionic current in an opposite direction as that of a discharging battery in service. In rechargeable batteries, the electrode active materials generally need to be able to accept and provide ions.

Many traditional rechargeable electrochemical cells (e.g., batteries) are constructed using solid anodes and cathodes. The assembly of such electrochemical cells can be difficult. For example, in many cases, rechargeable batteries are assembled by coating electrodes onto metal current collector foils, drying, compressing, and cutting such electrodes to shape, winding or stacking many thin layers of said electrodes along with separator films, and packaging into cells. Such manufacturing steps can require costly precision equipment. In addition, electrochemical cells employing solid anodes and cathodes can be relatively limited in size and form factor, and can be relatively fragile during use. An electrochemical cell system in which one or more of these problems is mitigated is desirable. WO 2009/151639 A1 describes redox flow devices in which at least one of the positive electrode or negative electrode-active materials is a semi-solid or is a condensed ion-storing electroactive material, and in which at least one of the electrode-active materials is transported to and from an assembly at which the electrochemical reaction occurs, producing electrical energy.

### SUMMARY

Energy generation using electrochemical energy generation devices comprising at least one stationary, fluid redox electrode is described. The invention is defined in the appended claims.

Advantages and novel features of the present invention will become apparent from the following detailed description of various non-limiting embodiments of the invention when considered in conjunction with the accompanying figures. In cases where the present specification and a document incorporated by reference include conflicting and/or inconsistent disclosure, the present specification shall control.

### BRIEF DESCRIPTION OF THE DRAWINGS

Non-limiting embodiments of the present invention will be described by way of example with reference to the accompanying figures, which are schematic and are not intended to be drawn to scale. In the figures, each identical or nearly identical component illustrated is typically represented by a single numeral. For purposes of clarity, not every component is labeled in every figure, nor is every component of each embodiment of the invention shown where illustration is not necessary to allow those of ordinary skill in the art to understand the invention. In the figures:
FIG. 1 is an exemplary cross-sectional schematic diagram of an electrochemical energy generation device, according to one set of embodiments;
FIG. 2 is an exemplary plot of viscosity as a function of shear rate;
FIGS. 3A-3B are Nyquist plots correlating the imaginary vs. real parts of the resistance of suspensions in AC testing conditions, according to some embodiments;
FIGS. 4A-4B are exemplary plots of voltage as a function of specific capacity, according to one set of embodiments;
FIGS. 5-8 include exemplary plots of voltage, capacity, and current as a function of time;
FIG. 9 includes exemplary plots of voltage as a function of time, according to one set of embodiments;
FIGS. 10A-10B are, according to one set of embodiments, exemplary plots of voltage as a function of capacity; and
FIGS. 11-13 are exemplary plots of voltage as a function of capacity, according to some embodiments.

### DETAILED DESCRIPTION

The present invention is related to electrochemical energy generation devices including at least one electrode comprising an electrochemically active fluid that is enclosed within the cell. According to the claimed invention, the anode and/or cathode of the electrochemical energy generation devices described herein can be formed of an electrochemically active fluid, such as a semi-solid or a redox active ion-storing liquid. The electrochemical energy generation device can be configured such that the anode and/or cathode can be flowed into their respective electrode compartments, for example, during assembly. During operation, on the other hand, none of the electrochemically active fluid(s) are transported into or out of the energy generation device e.g. out of the first and/or the second electrode compartment(s) of the electrochemical energy generation device.

In some embodiments, the positive and/or negative electrochemically active fluid(s) have percolating networks of fine electronically conductive particles (e.g., nanoscale particles), which can impart electronic conductivity to the electrode. Examples of such particles include, for example, carbon, graphite, fullerenes, carbon nanotubes, graphene, metals, metal sulfides, metal carbides, metal borides, or metal oxides. The electrochemically active fluid(s) can also include a charge-storing material that stores charge, for example, through Faradaic reaction, capacitive storage of charge, or pseudocapacitive behavior. The electronically conductive particle network and the charge storing material may be (although they are not required to be) made of the same material.

The use of electrochemically active fluids as the electrode(s) of energy generation devices can provide a variety of advantages. For example, the ability to flow the cathode and/or anode into a pre-assembled, fixed volume electrode compartment can simplify the assembly process. Electrochemically active fluid(s) can be easily and economically fabricated into electrodes by filling a space determined by the design of the battery. That is, the electrochemically active fluid(s) can be poured, injected, extruded or otherwise deformed under a gravitational force or other applied force into a space in a battery construction to form an electrode. Because the electrochemically active fluids conform to the outline of their container, the use of such materials can allow one to easily scale the size of the cell for a desired application and/or produce cells with large variations in form factor, relative to traditional battery assembly methods which can involve, for example, successively depositing layers of materials.

Unlike many other methods of battery manufacturing, the electrodes can be configured to remain flowable after assembly. For example, the electrodes can be configured to remain flowable during operation of the cell. The use of an electrochemically active fluid in the anode and/or cathode that remains flowable during use can allow one to produce highly durable electrochemical cells. Electrochemically active fluids have the ability to tolerate substantial mechanical deformations, relative to the electrode materials used in conventional batteries. Most Faradaic storage materials (including alkali ion or proton intercalation compounds, materials that alloy with alkali metals or hydrogen upon electrochemical reaction, or materials that undergo a displacement or conversion reaction) exhibit substantial volume changes during the absorption and release of ions. These volume changes can lead to substantial stresses that are known, in many cases, to cause mechanical fatigue or failure, or chemical degradation, which can decrease the life, impedance, and/or safety of the battery. Electrochemically active fluids, on the other hand, are generally inherently tolerant to mechanical stresses, and are therefore inherently resistant to such degradation mechanisms. In other embodiments, rather than remaining flowable after assembly, the electrochemically active material can be further modified to decrease or increase its viscosity or yield stress (e.g., when the fluid comprises a Bingham solid), for example by thermal treatment, polymerization and/or cross-linking of constituents of the electrochemically active fluid, and/or by an electrochemical operation that produces reaction products that modifies the rheology of the electrochemically active fluid.

As used herein, the terms "electrochemically active fluid" and "flowable redox active composition" are used interchangeably to refer to fluid compositions that contain any electrode active material in a concentration sufficiently high to allow for operation of the energy storage device at its intended level. In some embodiments, the ionic conductivity of the working ion of the energy storage device (e.g., Li⁺ for lithium-ion based devices) within the electrochemically active fluid can be at least about 0.001 mS/cm, at least about 0.01 mS/cm, at least about 0.1 mS/cm, at least about 1 mS/cm, between about 0.001 and about 100 mS/cm, between about 0.01 and about 10 mS/cm, between about 0.01 mS/cm and about 100 mS/cm, or between about 0.01 and about 10 mS/cm at the temperature at which the energy storage device is operated (e.g., at least one temperature between about -50°C and about +50°C).

The term "electrode active material," as used herein, refers to any material capable of taking up and/or releasing ions and electrons during operation of the cell. The term "anode active material" is used to refer to electrode active materials associated with the anode, while the term "cathode active material" is used to refer to electrode active materials associated with the cathode. It should be understood that, as used herein, an electrode active material is not the same as an electrolyte. The term "electrolyte" is used herein to refer to material that does not itself take up or release ions, but rather, facilitates transport of ions to and/or from electrode active material contained within the electrolyte to other parts of the electrochemical cell. Furthermore, the electrode active materials do not include materials that are added to facilitate the transport of electrons from an electrode current collector to the electrode active material (i.e., additional materials that increase the electronic conductivity).

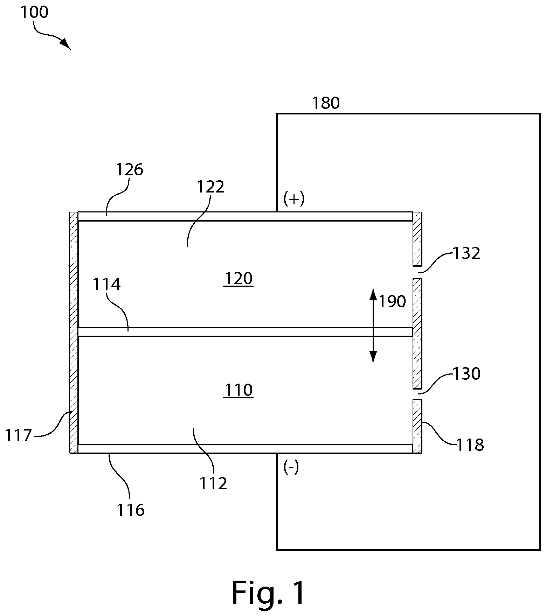

FIG. 1 is an exemplary cross-sectional schematic illustrations of electrochemical cell 100 in which the electrodes comprise electrochemically active fluids. Electrochemical cell 100 includes an electrode compartment 112 that is bounded by an ion-exchange medium 114 and an electrode current collector 116. As used herein, the term "electrode current collector" refers to the portion of the electrochemical cell that conducts electrons away from the electrode compartment but does not substantially participate in the electrochemical reaction. An electrode current collector can comprise, in some embodiments, a metal sheet or piece of carbon in electronic communication with an electrochemically active fluid within the electrode compartment.

The electrode current collector and the ion-exchange medium can at least partially define an electrode compartment. In the set of embodiments illustrated in FIG. 1, ion-exchange medium 114 forms a first boundary of electrode compartment 112, and electrode current collector 116 forms a second boundary of electrode compartment 112. The electrode compartment also includes one or more other boundaries formed of material that does not serve as either the electrode current collector or the ion-exchange medium. Electrode compartment 112 also includes walls 117 and 118 formed of, for example, a polymer or some other suitable containment material that is not electrically conductive. In the claimed invention, at least a portion of the walls includes a deformable polymer.

While the ion-exchange medium and the electrode current collector are illustrated as defining opposite sides of the electrode compartment in FIG. 1, it should be understood that other arrangements are also possible. One of ordinary skill in the art, given the present disclosure, would be capable of designing a variety of configurations of the electrode current collector and the ion-exchange medium while maintaining operability of the electrochemical cell.

The electrochemical cell also includes a second electrode compartment and can include a second electrode current collector. In the set of embodiments illustrated in FIG. 1, electrochemical cell 100 includes a second electrode current collector 126 positioned on the side of ion-exchange medium 114 opposite current collector 116. In addition, electrode current collector 126 and ion-exchange medium 114 define a second electrode compartment 122. In the set of embodiments illustrated in FIG. 1, electrode compartment 112 contains an electrochemically active fluid 110 comprising anode active material (and electrode current collector 116 is anodic) while electrode compartment 122 contains an electrochemically active fluid 120 comprising cathode active material (and electrode current collector 126 is cathodic). In other embodiments, however, electrode compartment 112 can contain a cathode active material (and electrode current collector 116 can be cathodic) while electrode compartment 122 can contain an anode active material (and electrode current collector 126 can be anodic).

In some embodiments, at least one of the first and/or second electrode compartments is configured such that an electrochemically active fluid can be flowed into the compartment. The electrode compartment(s) can be assembled as fixed volume compartments to which the electrochemically active fluids are added. For example, in FIG. 1, electrode compartment 112 can be configured such that it is a fixed-volume compartment to which electrochemically active fluid 110 is added, for example, during assembly of the cell. In addition (or, in the alternative), electrode compartment 122 can be configured such that it is a fixed-volume compartment to which electrochemically active fluid 120 is added.

One can configure an electrode compartment to accept an electrochemically active fluid, for example, by first forming the compartment (including the ion-exchange medium and the electrode current collector) and incorporating an inlet into the electrode compartment through which the electrochemically active fluid is loaded. For example, in FIG. 1, electrode compartment 112 can be formed by assembling ion-exchange medium 114, electrode current collector 110, walls 117 and 118, and any other portions necessary to form an enclosed, fixed-volume compartment. Wall 118 can be configured to include inlet 130 through which electrochemically active fluid 110 can be loaded into compartment 112. In addition (or, in the alternative), electrode compartment 122 can be formed by assembling ion-exchange medium 114, electrode current collector 126, and walls 117 and 118, and any other portions necessary to form an enclosed, fixed-volume compartment. Wall 118 can be configured to include inlet 132 through which electrochemically active fluid 120 can be loaded into compartment 122. Inlets 130 and 132 can be pre-formed in wall 118 prior to assembly of the compartments, or they can be formed after assembly of the compartments (e.g., by drilling a hole, removing a filler material, etc.).

Assembly of an electrochemical cell configured as outlined in FIG. 1 can be relatively easy, as the electrodes are formed simply by transporting (e.g., pouring, injecting, extruding, or otherwise deforming under gravitational force or other applied force) the electrochemically active fluid(s) into pre-formed compartment(s). The shape and size of the electrodes are easily configured by fabricating electrode compartments with the desired form factor. After the electrochemically active fluid(s) have been added to the electrode compartment(s), the compartment(s) can be sealed, as described in more detail below.

Once an electrochemically active fluid has been added to an electrode compartment, the fluid can be disposed such that it is in electrochemical communication with the ion-exchange medium and/or an electrochemically active material in a second electrode compartment (either in a stationary solid or in an electrochemically active fluid), for example, as part of an electrochemical energy storage and/or transfer device. As used herein, two components are in "electrochemical communication" with each other when they are arranged such that they are capable of exchanging ions as part of an electrochemical reaction at a level sufficient to operate a device utilizing the components at its intended level. For example, in the set of embodiments illustrated in FIG. 1, electrochemically active fluid 110 within electrode compartment 112 can electrochemically communicate with ion-exchange medium 114 when ions are transported from electrochemically active fluid 110 to ion-exchange medium 114, after which, the ions may be further transported, for example, to electrochemically active fluid 120 within electrode compartment 122 as part of an electrochemical reaction.

During operation, the cathode active material and the anode active material can undergo reduction and oxidation. Ions can move across ion-exchange medium 114, for example, along double-arrow 190. During discharging operation, the difference in electrochemical potentials of the positive and negative electrode active materials of the redox flow device can produce a voltage difference between the positive and negative electrode current collectors; the voltage difference can produce an electric current if the electrode current collectors are connected in a conductive circuit. In the set of embodiments illustrated in FIG. 1, electrons can flow through external circuit 180 to generate current.

In some embodiments, the electrochemical cell can also be operated in charging mode. During charging operation, the electrode compartment containing a depleted electrochemically active fluid can be run in reverse, for example, by applying a voltage across the electrode current collectors sufficiently high to drive electronic current and ionic current in a direction opposite to that of discharging and reverse the electrochemical reaction of discharging, thereby charging the electrode active material within the positive and negative electrode compartments.

In the claimed invention, the electrochemical cell is configured such that, during operation, none of the first and/or the second electrochemically active fluid is transported out of the first or second electrode compartment. In some embodiments, the electrochemical cell is configured such that, during operation (e.g., during charge and/or during discharge), little or none of the first and/or second electrochemically active fluids are transported into their electrode compartments. For example, in some embodiments, the electrochemical cell is configured such that, during operation, none of the first electrochemically active fluid (e.g., fluid 110 in FIG. 1) is transported into the first electrode compartment (e.g., compartment 112 in FIG. 1). In addition (or, in the alternative), the electrochemical cell can be configured such that, during operation, none of the second electrochemically active fluid (e.g., fluid 120 in FIG. 1) is transported into the second electrode compartment (e.g., compartment 122 in FIG. 1).

One can configure an electrochemical cell such that electrochemically active fluids are not transported into or out of their electrode compartments by sealing the electrode compartments. In FIG. 1, inlets 130 and/or 132 can be sealed after electrochemically active fluids 110 and 120, respectively, have been added to the cell. In some embodiments, the electrode compartment(s) can be hermetically sealed. Sealing can be achieved by, for example, inserting a plug into the inlets, melting a material (e.g., via metal soldering, glass brazing, etc.) over the inlets, or via any other suitable method.

As noted above, an electrochemically active fluid can remain flowable after it has been added to an electrode compartment and, in some cases, during operation of the cell. In some embodiments, the steady state shear viscosity of the electrochemically active fluid within the electrode compartment(s) (at any point while it is being transported into the compartment, after it has been transported into the electrochemical cell, and/or during use (charge and/or discharge) of the electrochemical cell) can be from about 1 mPa^{∗}s to about 1.5 kPa^{∗}s, from about 1 mPa^{∗}s to about 1 kPa^{∗}s, from about 1 mPa^{∗}s to about 500 Pa^{∗}s, or from about 1 mPa^{∗}s to about 100 Pa^{∗}s (about 1 centipoise (cP) to about 1.5×10⁶ cP, from about 1 cP to about 10⁶ cP, from about 1 cP to about 500,000 cP, or from about 1 cP to about 100,000 cP) at the operating temperature of the energy storage device, e.g. at any temperature between about -50°C and +50°C. In some embodiments, the steady state shear viscosity of the electrochemically active fluid within the electrode compartment(s) (at any point while it is being transported into the compartment, after it has been transported into the electrochemical cell, and/or during use (charge and/or discharge) of the electrochemical cell) can be less than about 1.5 kPa^{∗}s, less than about 1 kPa^{∗}s, less than about 500 Pa^{∗}s, or less than about 100 Pa^{∗}s (less than about 1.5 ×10⁶ cP, less than about 1×10⁶ cP, less than about 500,000 cP, or less than about 100,000 cP at the operating temperature of the energy storage device e.g. at any temperature between about -50°C and +50°C. In some embodiments, the electrochemically active fluid(s) are non-Newtonian, meaning they have a viscosity that is not a constant value but may depend on the shear-rate applied to the fluid, the history of the fluid, or time.

The viscosity of the electrochemically active fluid can be adjusted, for example, by altering the amount of solid within the fluid. For example, in embodiments in which a semi-solid is used (described in more detail below), the volume percentage of ion-storing solid phases may be between about 5% and about 70%, and the total solids volume percentage including other solid phases such as conductive additives may be between about 10% and about 75%. In some embodiments, even higher percentages of solids can be used. For example, in some embodiments, the volume percentage of ion-storing solid phases may be at least about 75%, at least about 80%, or at least about 85%. In some embodiments, the total solids volume percentage (including other solid phases such as conductive additives) may be at least about 80%, at least about 85%, or at least about 90%.

Maintaining the ability to flow the electrochemically active fluid during operation of the cell can provide several advantages. For example, the electrochemically active fluid may be circulated within an electrode compartment during operation of the cell, which can increase the amount of electroactive material available at a current collector and/or ion-exchange medium. In addition, maintaining the ability to flow the electrochemically active fluid during operation of the cell can enhance cell durability, as described elsewhere herein. Methods for producing said circulation include, but are not limited to, stirring and/or inducing convective currents (e.g., by producing thermal gradients in the electrode and/or by producing density differences in the electrode, for example, by electrochemical cycling). As one example, an electrode compartment can contain a mechanical stirrer (e.g., a shaft and propeller, a moveable track drive, a helical auger, or other device), which can be used to mechanically stir the fluid within the electrode compartment. As another example, a portion of an electrode compartment can be heated (and/or another portion of the electrode compartment can be cooled) such that a thermal gradient is introduced to the fluid within the electrode compartment. In some embodiments, the amount of heating and/or cooling can be selected such that a desired flow profile is produced in the fluid within the electrode compartment. As another example, convection can be induced within an electrode compartment due to electrochemical cycling. For example, density differences in the fluid within the electrode compartment can be produced as a result of charging and/or discharging the electrode. In some embodiments, bubbles or other low-density regions may be produced as an electrochemical by product, which can be used to circulate the fluid.

At least a portion of (or all of) the walls of the electrochemical cell is deformable such that they can withstand a mechanical load without rupturing. According to the invention, at least a portion of the walls includes a deformable polymer.

For example, at least a portion of the walls of the electrochemical cell can be made of a ductile and/or elastic material such as a polymer (e.g., an elastomeric polymer) which, during assembly and/or operation of the electrochemical cell, does not exceed its elastic limit. In addition, in some embodiments, the electrochemical cell may optionally incorporate a displaceable or deformable ion-exchange medium (e.g., ion-permeable membrane separator) located between the electrochemically active fluids. The combination of the deformability of the cell walls, deformability of the ion-exchange medium, and the ability to flow one or both electrodes, the electrochemical cell can expand and/or contract during use without mechanical fatigue or failure, thereby improving the lifetime and/or lowering the cost of the electrochemical cell. Of course, in some embodiments, at least a portion of the walls of the electrochemical cell can be rigid.

For example, an electrochemical cell comprising an electrochemically active fluid (e.g., as both positive and negative electrodes) may comprise rigid walls with a displaceable separator in between the electrode compartments to allow for the expansion and contraction of each electrode. In some embodiments, an electrochemical cell may comprise a rigid ion-exchange medium and electrode compartments comprising flexible walls. In some embodiments, both the ion-exchange medium and the electrode compartment walls may be flexible. A mechanically flexible electrochemical cell may also be produced through such a construction. For example, a relatively thin electrochemical cell can be configured to be flexible enough to be used in application where it is deformed to fit an available space, to follow the contours of a curved support or surface, or where the electrochemical cell is attached to a structural member or surface that undergoes deformation in use. Such deformation may be occasional or may be cyclic in nature.

While the set of embodiments illustrated in FIG. 1 includes electrode compartments arranged as parallel plates, other geometries are also possible. For example, in one set of embodiments, the electrochemical cell can comprise a deformable bag with two electrode compartments separated by an ion-exchange medium. In some embodiments, the electrode compartments can be configured concentrically such that the first electrode compartment comprises a cylinder and the second electrode compartment comprises a cylindrical shell at least partially surrounding the first electrode compartment.

While the set of embodiments illustrated in FIG. 1 includes electrochemically active fluids in both electrode compartments, it should be understood that, in other embodiments, the positive or negative electrochemically active fluid can be replaced with a conventional stationary electrode. For example, in some embodiments, the negative electrode can be a conventional stationary electrode, while the positive electrode includes a positive electrochemically active fluid. In other embodiments, the positive electrode can be a conventional stationary electrode, while the negative electrode includes a negative electrochemically active fluid.

In some embodiments, the electrochemically active fluid in the anode and/or the cathode is electronically conductive. Electronic conductivity can be achieved, in some embodiments, by suspending an electrically conductive solid (e.g., carbon, metal, etc.) in the electrochemically active fluid, for example, as described in more detail below. In some embodiments the electrochemically active fluid (which can comprise, for example, a semi-solid and/or a redox active ion-storing liquid) has an electronic conductivity of at least about 10⁻⁶ S/cm, at least about 10⁻⁵ S/cm, at least about 10⁻⁴ S/cm, or at least about 10⁻³ S/cm while it is at the temperature at which the energy storage device is operated, e.g. at least one temperature between about -50°C and about +50°C. As one example, the electrochemically active fluid can comprise a redox active ion-storing liquid having any of the electronic conductivities described herein. In some embodiments, the electrochemically active fluid comprises a semi-solid, wherein the mixture of the liquid and solid phases, when measured together, has any of the electrical conductivities described herein.

A variety of electrochemically active fluids can be used in the energy generation systems described herein. In some embodiments, the electrochemically active fluid can comprise an electrode active material suspended (e.g., in the case of an insoluble electrode active material such as a lithium intercalation compound) and/or dissolved (e.g., in the case of an electrochemically active soluble salt) in a fluid that would not otherwise be electrochemically active. For example, the electrochemically active fluid, in some embodiments, comprises an electrode active material suspended and/or dissolved in an ion-conducting electrolyte. In other cases, the electrochemically active fluid can comprise a liquid that is itself electrochemically active.

In some embodiments, at least one of the positive and negative electrochemically active fluids may include a semi-solid. By "semi-solid" it is meant that the material is a mixture of liquid and solid phases, for example, such as a slurry, particle suspension, colloidal suspension, emulsion, gel, or micelle. In some embodiments, the emulsion or micelle in a semi-solid includes a solid in at least one of the liquid-containing phases. In some embodiments, the solid within the semi-solid can remain un-dissolved within the energy storage device during operation of the energy storage device, such that a solid phase remains present within the electrochemically active fluid during operation of the device. For example, the electrode active material and the electrolyte can be selected, in some embodiments, such that the electrode active material does not dissolve within the electrolyte during operation of the energy storage device.

In some embodiments, at least one of the positive and negative electrochemically active fluids can comprise a redox active ion-storing liquid (which can also be referred to as a condensed liquid ion-storing liquid). "Redox active ion-storing liquid" (or "condensed ion-storing liquid") is used to refer to a liquid that is not merely a solvent (as in the case of an aqueous electrolyte (e.g., catholyte or anolyte)), but rather, a liquid that is itself redox-active. Of course, such a liquid form may also be diluted by or mixed with another, non-redox-active liquid that is a diluent or solvent, including mixing with such a diluent to form a lower-melting liquid phase, or emulsion or micelles including the ion-storing liquid. In some embodiments, at least one of the positive and negative electrochemically active fluids may include both a semi-solid and a redox active ion-storing liquid.

The use of a semi-solid or redox active ion-storing liquid can enhance the performance of the energy storage devices, relative to other, less energy dense materials used in other conventional systems. One distinction between conventional flowable electrodes and the ion-storing solid or liquid phases described herein is the molar concentration or molarity of redox species in the storage compound. As a specific example, conventional flowable electrodes that have redox species dissolved in aqueous solution may be limited in molarity to typically 2M to 8M concentration. Highly acidic solutions may be needed to reach the higher end of this concentration range. However, such measures may be detrimental to other aspects of the cell operation. For example, these measures may increase corrosion of cell components, storage vessels, and associated plumbing. Furthermore, the extent to which metal ion solubilities may be increased is limited.

By contrast, the positive and/or negative electrode active materials described herein (e.g., for use in semi-solid electrochemically active fluids) can be insoluble in the electrolyte, and accordingly, the concentrations of the electrode active materials are not limited by the solubility of the electrode active materials within a solvent such as an electrolyte. As one non-limiting example, the electrode active material can comprise a lithium intercalation compound suspended in an electrolyte, wherein the lithium intercalation compound is capable of taking up and/or releasing ions during operation of the device without dissolving within the electrolyte. That is to say, the lithium intercalation compound can remain in the solid phase during operation of the energy storage device. For example, in some embodiments, LiCoO₂ can be used as an electrode active material, and Li⁺ can be used as the active ion within an energy storage device. During operation of the device, the following electrochemical reactions can take place:
Charge: LiCoO₂ → xLi⁺ + xe⁻ + Li₁₋ₓCoO₂
Discharge: xLi⁺ + xe⁻ + Li₁₋ₓCoO₂ → LiCoO₂

In some such embodiments, a solid phase (e.g., Li₁₋ₓCoO₂ and LiCoO₂) remains within the electrochemically active fluid throughout the various stages of charge and discharge of the energy storage device.

Any flowable semi-solid or redox active ion-storing liquid as described herein may have, when taken in moles per liter or molarity, at least 10M, at least 12M, at least 15M, or at least 20M concentration of electrode active material. The electrode active material can be an ion storage material or any other compound or ion complex that is capable of undergoing Faradaic reaction in order to store energy. The electrode active material can also be a multiphase material including a redox-active solid or liquid phase mixed with a non-redox-active phase, including solid-liquid suspensions, or liquid-liquid multiphase mixtures, including micelles or emulsions having a liquid ion-storage material intimately mixed with a supporting liquid phase.

Systems employing electrochemically active fluids comprising semi-solid(s) and/or redox active ion-storing liquid(s) can also be advantageous because the use of such materials does not produce electrochemical byproducts in the cell. In the case of semi-solids, the electrolyte does not become contaminated with electrochemical composition products that must be removed and/or regenerated because the electrode active materials are insoluble in the electrolyte. Redox active ion-storing liquids provide a similar benefit as they are able to directly release and/or take up ions without producing by-product(s).

In some embodiments, the flowable semi-solid and/or redox active ion-storing liquid composition includes a gel.

A variety of types of electrode active materials can be used in association with the embodiments described herein. The features and aspects of the invention described herein can be used in primary (disposable) and secondary (rechargeable) batteries. Systems (including systems employing electrochemically active materials comprising semi-solid(s) and/or redox active ion-storing liquid(s)) that utilize various working ions are contemplated, including systems in which H⁺; OH⁻, Li⁺, Na⁺, and/or other alkali ions; Ca²⁺, Mg²⁺ and/or other alkaline earth ions; and/or Al³⁺ are used as the working ions. In addition, the electrochemically active fluids can include aqueous and/or non-aqueous components. In each of these instances, a negative electrode storage material and a positive electrode storage material may be required, the negative electrode storing the working ion of interest at a lower absolute electrical potential than the positive electrode. The cell voltage can be determined approximately by the difference in ion-storage potentials of the two ion-storage electrode materials.

In some embodiments, the electrochemically active fluid includes materials proven to work in conventional, solid lithium-ion batteries. In some embodiments, the positive electrochemically active fluid contains lithium positive electrode active materials, and lithium cations are shuttled between the negative electrode and the positive electrode, intercalating into solid, host particles suspended in a liquid electrolyte.

In some embodiments at least one of the electrochemically active fluids includes a redox active ion-storing liquid of an electrode active material, which may be organic or inorganic, and includes but is not limited to lithium metal, sodium metal, lithium-metal alloys, gallium and indium alloys with or without dissolved lithium, molten transition metal chlorides, thionyl chloride, and the like, or redox polymers and organics that are liquid under the operating conditions of the battery. Such a liquid form may also be diluted by or mixed with another, non-redox-active liquid that is a diluent or solvent, including mixing with such a diluents to form a lower-melting liquid phase. However, unlike a conventional cell flowable electrode, the electrode active material can comprise by mass at least 10%, or at least 25% of the total mass of the electrochemically active fluid.

In some embodiments, the electrochemically active fluid, whether in the form of a semi-solid or a redox active ion-storing liquid as described above, comprises an organic redox compound that stores the working ion of interest at a potential useful for either the positive or negative electrode of a battery. Such organic electrode active materials include "p"-doped conductive polymers such as polyaniline or polyacetylene based materials, polynitroxide or organic radical electrodes (such as those described in: H. Nishide et al., Electrochim. Acta, 50, 827-831, (2004), and K. Nakahara, et al., Chem. Phys. Lett., 359, 351-354 (2002)), carbonyl based organics, and oxocarbons and carboxylate, including compounds such as Li₂C₆O₆, Li₂C₈H₄O₄, and Li₂C₆H₄O₄ (see for example M. Armand et al., Nature Materials, DOI: 10.1038/nmat2372).

In some embodiments the electrode active material comprises a sol or gel, including for example metal oxide sols or gels produced by the hydrolysis of metal alkoxides, amongst other methods generally known as "sol-gel processing." Vanadium oxide gels of composition VₓO_{y} are amongst such electrode active sol-gel materials.

Suitable positive electrode active materials include solid compounds known to those skilled in the art as those used in NiMH (Nickel-Metal Hydride) Nickel Cadmium (NiCd) batteries. Still other positive electrode active materials for Li storage include those used in carbon monofluoride batteries, generally referred to as CFₓ, or metal fluoride compounds having approximate stoichiometry MF₂ or MF₃ where M comprises Fe, Bi, Ni, Co, Ti, V. Examples include those described in H. Li, P. Balaya, and J. Maier, Li-Storage via Heterogeneous Reaction in Selected Binary Metal Fluorides and Oxides, Journal of The Electrochemical Society, 151 [11] A1878-A1885 (2004), M. Bervas, A.N. Mansour, W.-S. Woon, J.F. Al-Sharab, F. Badway, F. Cosandey, L.C. Klein, and G.G. Amatucci, "Investigation of the Lithiation and Delithiation Conversion Mechanisms in a Bismuth Fluoride Nanocomposites", J. Electrochem. Soc., 153, A799 (2006), and I. Plitz, F. Badway, J. Al-Sharab, A. DuPasquier, F. Cosandey and G.G. Amatucci, "Structure and Electrochemistry of Carbon-Metal Fluoride Nanocomposites Fabricated by a Solid State Redox Conversion Reaction", J. Electrochem. Soc., 152, A307 (2005).

As another example, fullerenic carbon including single-wall carbon nanotubes (SWNTs), multiwall carbon nanotubes (MWNTs), or metal or metalloid nanowires may be used as electrode active materials. One example includes the silicon nanowires used as a high energy density storage material in a report by C.K. Chan, H. Peng, G. Liu, K. McIlwrath, X. F. Zhang, R.A. Huggins, and Y. Cui, High-performance lithium battery anodes using silicon nanowires, Nature Nanotechnology, published online 16 December 2007; doi: 10.1038/nnano.2007.411.

In some embodiments, the negative electrochemically active fluid can comprise carbon exhibiting capacitive or pseudocapacitive charge storage. In some embodiments, the negative electrochemically active fluid can comprise a relatively high concentration of such carbons. For example, in some embodiments, the electrochemically active fluid can contain a carbon (e.g., a high-surface-area carbon) exhibiting capacitive or pseudocapacitive storage of charge in an amount of at least about 55 wt%, at least about 60 wt%, at least about 65 wt%, at least about 70 wt%, at least about 75 wt%, at least about 80 wt%, or at least about 85 wt% of the negative electrochemically active fluid. In some embodiments, the carbon within the negative electrochemically active fluid (e.g., some or all of the carbon capable of exhibiting capacitive or pseudocapacitive charge storage) can have a relatively high surface area. For example, the high-surface-area carbon can have a surface area of at least about 50 m²/gram of the carbon, at least about 100 m²/gram of the carbon, at least about 250 m²/gram of the carbon, or at least about 500 m²/gram of the carbon. One of ordinary skill in the art would be capable of measuring the surface area of a carbon sample using, for example, the Brunauer-Emmett-Teller (BET) method. In addition, one of ordinary skill in the art would be capable of identifying carbons capable of exhibiting capacitive or pseudocapacitive charge storage, for example, by fabricating and testing an electrochemical cell using said carbon as an electrode. For example, activated carbons (e.g., acetylene black, carbon black, furnace black) and fullerenic carbons (e.g., graphene, graphene-oxide, single-wall carbon nanotubes, multi-wall carbon nanotubes) are capable of exhibiting capacitive or pseudocapacitive charge storage. The use of carbons capable of exhibiting capacitive or pseudocapacitive charge storage can be advantageous because, while such materials generally provide less energy capacity than other materials such as intercalation compounds, they generally provide very high power, cycle life, and durability.

Exemplary electrode active materials for the positive electrochemically active fluid in a lithium system include the general family of ordered rocksalt compounds LiMO₂ including those having the α-NaFeO₂ (so-called "layered compounds") or orthorhombic-LiMnO₂ structure type or their derivatives of different crystal symmetry, atomic ordering, or partial substitution for the metals or oxygen. In such embodiments, M comprises at least one first-row transition metal but may include non-transition metals including but not limited to Al, Ca, Mg, or Zr. Examples of such compounds include LiCoO₂, LiCoO₂ doped with Mg, LiNiO₂, Li(Ni, Co, Al)O₂ (known as "NCA") and Li(Ni, Mn, Co)O₂ (known as "NMC"). Other families of exemplary electrode active materials include those of spinel structure, such as LiMn₂O₄ and its derivatives, "high voltage spinels" with a potential vs. Li/Li⁺ that exceeds 4.3V including but not limited to LiNi_{0.5}Mn_{1.5}O₄, so-called "layered-spinel nanocomposites" in which the structure includes nanoscopic regions having ordered rocksalt and spinel ordering, olivines LiMPO₄ and their derivatives, in which M comprises one or more of Mn, Fe, Co, or Ni, partially fluorinated compounds such as LiVPO₄F, other "polyanion" compounds, and vanadium oxides VₓO_{y} including V₂O₅ and V₆O₁₁.

In one or more embodiments, an electrode active material comprises a transition metal polyanion compound, for example as described in U.S. Patent No. 7,338,734. In one or more embodiments, an electrode active material comprises an alkali metal transition metal oxide or phosphate, and for example, the compound has a composition Aₓ(M'₁₋ₐM"ₐ)_{y}(XD₄)_{z}, Aₓ(M'₁₋ₐM"ₐ)_{y}(DXD₄)_{z}, or Aₓ(M'₁₋ₐM"ₐ)_{y}(X₂D₇)_{z}, and have values such that x, plus y(1-a) times a formal valence or valences of M', plus ya times a formal valence or valence of M", is equal to z times a formal valence of the XD₄, X₂D₇, or DXD₄ group; or a compound comprising a composition (A₁₋ₐM"ₐ)ₓM'_{y}(XD₄)_{z}, (A₁₋ₐM"ₐ)ₓM'_{y}(DXD₄)z(A₁₋ₐM"ₐ)ₓM'_{y}(X₂D₇)_{z} and have values such that (1-a)x plus the quantity ax times the formal valence or valences of M" plus y times the formal valence or valences of M' is equal to z times the formal valence of the XD₄, X₂D₇ or DXD₄ group. In such compounds, A is at least one of an alkali metal and hydrogen, M' is a first-row transition metal, X is at least one of phosphorus, sulfur, arsenic, molybdenum, and tungsten, M" any of a Group IIA, IIIA, IVA, VA, VIA, VIIA, VIIIA, IB, IIB, IIIB, IVB, VB, and VIB metal, D is at least one of oxygen, nitrogen, carbon, or a halogen. The positive electroactive material can be an olivine structure compound LiMPO₄, where M is one or more of V, Cr, Mn, Fe, Co, and Ni, in which the compound is optionally doped at the Li, M or O-sites. Deficiencies at the Li-site are compensated by the addition of a metal or metalloid, and deficiencies at the O-site are compensated by the addition of a halogen. In some embodiments, the positive active material comprises a thermally stable, transition-metal-doped lithium transition metal phosphate having the olivine structure and having the formula (Li₁₋ₓZₓ)MPO₄, where M is one or more of V, Cr, Mn, Fe, Co, and Ni, and Z is a non-alkali metal dopant such as one or more of Ti, Zr, Nb, Al, or Mg, and x ranges from 0.005 to 0.05.

In other embodiments, the lithium transition metal phosphate material has an overall composition of Li_{1-x-z}M_{1+z}PO₄, where M comprises at least one first row transition metal selected from the group consisting of Ti, V, Cr, Mn, Fe, Co and Ni, where x is from 0 to 1 and z can be positive or negative. In some embodiments, M includes Fe, and z is between about 0.15 and -0.15. The material can exhibit a solid solution over a composition range of 0 < x < 0.15, or the material can exhibit a stable solid solution over a composition range of x between 0 and at least about 0.05, or the material can exhibit a stable solid solution over a composition range of x between 0 and at least about 0.07 at room temperature (22-25 °C). The material may also exhibit a solid solution in the lithium-poor regime, e.g., where x ≥ 0.8, or x ≥ 0.9, or x ≥ 0.95.

In some embodiments an electrode active material comprises a metal salt that stores an alkali ion by undergoing a displacement or conversion reaction. Examples of such compounds include metal oxides such as CoO, Co₃O₄, NiO, CuO, MnO, typically used as a negative electrode in a lithium battery, which upon reaction with Li undergo a displacement or conversion reaction to form a mixture of Li₂O and the metal constituent in the form of a more reduced oxide or the metallic form. Other examples include metal fluorides such as CuF₂, FeF₂, FeF₃, BiF₃, CoF₂, and NiF₂, which undergo a displacement or conversion reaction to form LiF and the reduced metal constituent. Such fluorides may be used as the positive electrode in a lithium battery. In other embodiments an electrode active material comprises carbon monofluoride or its derivatives.

In some embodiments the material undergoing displacement or conversion reaction is in the form of particulates having on average dimensions of 100 nanometers or less. In some embodiments the material undergoing displacement or conversion reaction comprises a nanocomposite of the active material mixed with an inactive host, including but not limited to conductive and relatively ductile compounds such as carbon, or a metal, or a metal sulfide.

In some embodiments the energy storage device is a lithium-based energy storage device (e.g., a lithium-based battery), and the negative electrode active compound comprises graphite, graphitic boron-carbon alloys, hard or disordered carbon, lithium titanate spinel, and/or a solid metal, metal alloy, metalloidm and/or metalloid alloy that reacts with lithium to form intermetallic compounds, including the metals Sn, Bi, Zn, Ag, and Al, and the metalloids Si and Ge. In some embodiments, Li₄Ti₅O₁₂ spinel or its doped or nonstoichiometric derivatives can be included as an electrode active material (e.g., a negative electrode active material).

Exemplary electrode active materials for the negative electrode (e.g., electrochemically active fluid) in the case of a lithium working ion include graphitic or non-graphitic carbon, amorphous carbon, or mesocarbon microbeads; an unlithiated metal or metal alloy, such as metals including one or more of Ag, Al, Au, B, Ga, Ge, In, Sb, Sn, Si, or Zn, or a lithiated metal or metal alloy including such compounds as LiAl, Li₉Al₄, Li₃Al, LiZn, LiAg, Li₁₀Ag₃, Li₅B₄, Li₇B₆, Li₁₂Si₇, Li₂₁Si₈, Li₁₃Si₄, Li₂₁Si₅, Li₅Sn₂, Li₁₃Sn₅, Li₇Sn₂, Li₂₂Sn₅, Li₂Sb, Li₃Sb, LiBi, or Li₃Bi, or amorphous metal alloys of lithiated or non-lithiated compositions.

In some embodiments, the energy storage devices of the present invention (including those using Li⁺ or Na⁺ as the working ion) comprise an aqueous electrolyte. Although the use of aqueous electrolytes can, in some cases, require the use of lower potentials (to avoid the electrolytic decomposition of water) than can be used with some nonaqueous systems (e.g., conventional lithium ion systems using alkyl carbonate electrolyte solvents), the energy density of a semi-solid aqueous battery can be much greater than that of a conventional aqueous solution cell (e.g., vanadium redox or zincbromine chemistry) due to the much greater density of ion storage that is possible in the solid phase of a semi-solid electrochemically active fluid. Aqueous electrolytes are typically less expensive than nonaqeous electrolytes and can lower the cost of the energy storage devices, while typically also having higher ionic conductivity. In addition, aqueous electrolyte systems can be less prone to formation of insulating SEIs on the conductive solid phases used in the electrochemically active fluids and/or electrode current collectors, which can increase the impedance of the energy storage device.

The following non-limiting examples of aqueous systems show that a broad range of cathode active materials, anode active materials, electrode current collector materials, electrolytes, and combinations of such components may be used in the semi-solid aqueous batteries of this set of embodiments.

In some embodiments, oxides of general formula AₓM_{y}O_{z} may be used as electrode active materials in an aqueous or non-aqueous electrochemical cell, wherein A comprises a working ion that may be one or more of Na, Li, K, Mg, Ca, Al, H⁺ and/or OH⁻; M comprises a transition metal that changes its formal valence state as the working ion is intercalated or deintercalated from the compound; O corresponds to oxygen; x can have a value of 0 to 10; y can have a value of 1 to 3; and z can have a value of 2 to 7.

The aqueous or nonaqueous semi-solid cells may also comprise, as the semi-solid electrochemically active fluid, one or more lithium metal "polyanion" compounds, including but not limited to compounds described in U.S. Patent Number 7,338,734, to Chiang et al*.* which is incorporated herein by reference in its entirety for all purposes. Such compounds include the compositions (A)ₓ(M'₁₋ₐM"ₐ)_{y}(XD₄)_{z}, Aₓ(M'₁₋ₐM"ₐ)_{y}(DXD₄)_{z}, or Aₓ(M'₁₋ₐM"ₐ)_{y}(X₂D₇)_{z}, wherein A is at least one of an alkali metal or hydrogen, M' is a first-row transition metal, X is at least one of phosphorus, sulfur, arsenic, boron, aluminum, silicon, vanadium, molybdenum and tungsten, M" is any of a Group IIA, IIIA, IVA, VA, VIA, VIIA, VIIIA, IB, IIB, IIIB, IVB, VB, and VIB metal, D is at least one of oxygen, nitrogen, carbon, or a halogen, 0 ≤ a ≤ 0.1, x is equal to or greater than 0, y and z are greater than 0 and have values such that x, plus y(1-a) times a formal valence or valences of M', plus ya times a formal valence or valence of M", is equal to z times a formal valence of the XD₄, X₂D₇, or DXD₄ group. In some embodiments, the compound crystallizes in an ordered or partially disordered structure of the olivine (AₓMXO₄), NASICON (Aₓ(M',M")₂(XO₄)₃), VOPO₄, LiFe(P₂O₇) or Fe₄(P₂O₇)₃ structure-types, and has a molar concentration of the metals (M' + M") relative to the concentration of the elements X that exceeds the ideal stoichiometric ratio y/z of the prototype compounds by at least 0.0001.

Other such compounds comprise the compositions (A₁₋ₐM"ₐ)ₓM'_{y}(XD₄)_{z}, (A₁₋ₐM"ₐ)ₓM'_{y}(DXD₄)_{z}, or (A₁₋ₐM"ₐ)ₓM'_{y}(X₂D₇)_{z}, wherein A is at least one of an alkali metal or hydrogen; M' is a first-row transition metal; X is at least one of phosphorus, sulfur, arsenic, boron, aluminum, silicon, vanadium, molybdenum and tungsten; M" any of a Group IIA, IIIA, IVA, VA, VIA, VIIA, VIIIA, IB, IIB, IIIB, IVB, VB, and VIB metal; D is at least one of oxygen, nitrogen, carbon, or a halogen; 0 ≤ a ≤ 0.1; and x, y, and z are greater than zero and have values such that (1-a)x plus the quantity ax times the formal valence or valences of M" plus y times the formal valence or valences of M' is equal to z times the formal valence of the XD₄, X₂D₇ or DXD₄ group. In some of these embodiments, the compound crystallizes in an ordered or partially disordered structure of the olivine (AₓMXO₄), NASICON (Aₓ(M',M")₂(XO₄)₃), VOPO₄, LiFe(P₂O₇) or Fe₄(P₂O₇)₃ structure-types, and has a molar concentration of the metals (M' + M") relative to the concentration of the elements X that exceeds the ideal stoichiometric ratio y/z of the prototype compounds by at least 0.0001.

Still other such compounds comprise the compositions (A_{b-a}M"ₐ)ₓM'_{y}(XD₄)_{z}, (A_{b-a}M"ₐ)ₓM'_{y}(DXD₄)_{z}, or (A_{b-a}M"ₐ)ₓM'_{y}(X₂D₇)_{z}, wherein A is at least one of an alkali metal or hydrogen; M' is a first-row transition metal; X is at least one of phosphorus, sulfur, arsenic, boron, aluminum, silicon, vanadium, molybdenum and tungsten; M" any of a Group IIA, IIIA, IVA, VA, VIA, VIIA, VIIIA, IB, IIB, IIIB, IVB, VB, and VIB metal; D is at least one of oxygen, nitrogen, carbon, or a halogen; 0 ≤ a≤ 0.1; a≤ b ≤ 1; and x, y, and z are greater than zero and have values such that (b-a)x plus the quantity ax times the formal valence or valences of M" plus y times the formal valence or valences of M' is equal to z times the formal valence of the XD₄, X₂D₇ or DXD₄ group. In some of these embodiments, the compound crystallizes in an ordered or partially disordered structure of the olivine (AₓMXO₄), NASICON (Aₓ(M',M")₂(XO₄)₃), VOPO₄, LiFe(P₂O₇) or Fe₄(P₂O₇)₃ structure-types, and has a molar concentration of the metals (M' + M") relative to the concentration of the elements X that exceeds the ideal stoichiometric ratio y/z of the prototype compounds by at least 0.0001.

Other aqueous rechargeable lithium batteries include the following combinations of cathode active materials/anode active materials: LiMn₂O₄/VO₂, Li(Ni₁₋ₓCOₓ)O₂/LiV₃O₈, LiCoO₂/LiV₃O₈, LiMn₂O₄/TiP₂O₇, LiMn₂O₄/LiTi₂(PO₄)₃, Li(Ni_{0.33}Mn_{0.33}Co_{0.33})O₂/LiₓV₂O₅, V₂O₅/LiₓV₂O₅, LiMn₂O₄/LiₓV₂O₅, LiMn₂O₄/NaTi₂(PO₄)₃, LiMn₂O₄/Li₃Fe₂(PO₄)₃, LiMn₂O₄/LiFeP₂O₇, LiMn₂O₄/LiFe₄(P₂O₇)₃, LiCoO₂/C, Li_{0.5}Mn₂O₄/LiCoO₂, γ-MnO₂/Zn, and TiO₂ (anatase)/Zn. The semi-solid batteries described herein can include the use of any one or more of these cathode-active materials with any one or more of the anode-active materials. Electrode conductive additives and binders, current collector materials, current collector coatings, and electrolytes that can be used in such non-flow systems (as described herein) can also be used in the semi-solid electrochemical cells described herein.

In some embodiments, the electrochemical cell can include an aqueous positive electrode active material comprising a material of the general formula LiₓFe_{y}PₐO_{z}, (wherein, for example, x can be between about 0.5 and about 1.5, *y* can be between about 0.5 and about 1.5, α can be between about 0.5 and about 1.5, and z can be between about 3 and about 5), and a negative electrode active material comprising a material of the general formula Li_{x'}Ti_{y'}O_{z'} (wherein, for example, x' can be between about 3 and about 5, y' can be between about 4 and about 6, and z' can be between about 9 and about 15 or between about 11 and about 13). As a specific example, in some embodiments, the positive electrode active material can comprise LiFePO₄ and the negative electrode active material can comprise Li₄Ti₅O₁₂. In some embodiments, the positive and/or negative electrode active materials can include cation or anion doped derivatives of these compounds.

Other specific combinations of electrode active materials that can be used in aqueous electrochemical cells (listed here as anode/cathode pairs) include, but are not limited to, LiV₃O₈/LiCoO₂; LiV₃O₈/LiNiO₂; LiV₃O₈/LiMn₂O₄; and C/Na_{0.44}MnO₂.

Sodium can be used as the working ion in conjunction with an aqueous electrolyte and cathode active or anode active compounds that intercalate sodium at suitable potentials, or that store sodium by surface adsorption and the formation of an electrical double layer as in an electrochemical capacitor or by surface adsorption accompanied by charge transfer. Materials for such systems have been described in US Patent Application US 2009/0253025, by J. Whitacre, for use in conventional secondary batteries. The semi-solid electrochemical cells described herein can use one or more of the cathode-active materials, anode-active materials, electrode conductive additives and binders, current collector materials, current collector coatings, and electrolytes considered in such systems. One or more embodiments described herein can incorporate these materials in semi-solid electrochemical cells.

Cathode active materials that store sodium and can be used in an aqueous electrolyte system include, but are not limited to, layered/orthorhombic NaMO₂ (birnessite), cubic spinel λ-MnO₂ based compounds, Na₂M₃O₇, NaMPO₄, NaM₂(PO₄)₃, Na₂MPO₄F, and tunnel-structured Na_{0.44}MO₂, where M is a first-row transition metal. Specific examples include NaMnO₂, LiₓMn₂O₄ spinel into which Na is exchanged or stored, LiₓNa_{y}Mn₂O₄, Na_{y}Mn₂O₄, Na₂Mn₃O₇, NaFePO₄, Na₂FePO₄F, and Na_{0.44}MnO₂. In some embodiments, the cathode active material comprises sodium manganese oxide (e.g., Na₄Mn₉O₁₈). Anode active materials can include materials that store sodium reversibly through surface adsorption and desorption, and include high surface area carbons such as activated carbons, graphite, mesoporous carbon, carbon nanotubes, and the like. They also may comprise high surface area or mesoporous or nanoscale forms of oxides such as titanium oxides, vanadium oxides, and compounds identified above as cathode active materials but which do not intercalate sodium at the operating potentials of the negative electrode.

The electrochemical cell can comprise a variety of nonaqueous electrolyte, lithium-ion systems. For example, in some embodiments, the electrochemical cell comprises a nonaqueous electrolyte, lithium-ion system using a lithium transition metal phospho-olivine as the cathode-active material and a lithium titanate spinel (e.g., Li₄Ti₅O₁₂). In some embodiments, the electrochemical cell comprises a nonaqueous electrolyte, lithium-ion system using LiMn₂O₄ as the cathode active material and a high surface area or nanoscale carbon (e.g., activated carbon) as the anode active material. In some embodiments, the electrochemical cell comprises a nonaqueous electrolyte, lithium ion system using a lithium titanate spinel (e.g., Li₄Ti₅O₁₂) as the cathode active material and a high surface area or nanoscale carbon (e.g., activated carbon) as the anode active material. These combinations of materials can provide high power and long cycle life at relatively low cost.

The electrochemical cell can also comprise a variety of aqueous electrolyte, lithium-ion systems. For example, in some embodiments, the electrochemical cell comprises an aqueous electrolyte, lithium-ion system using a lithium transition metal phospho-olivine as the cathode active material and a lithium titanate spinel (e.g., Li₄Ti₅O₁₂) as the anode active material. In some embodiments, the electrochemical cell comprises an aqueous electrolyte, lithium-ion system using a lithium titanate spinel, (e.g., Li₄Ti₅O₁₂) as the cathode active material and a high surface area or nanoscale carbon, activated carbon being a non-limiting example, as the anode active material. In some embodiments, the electrochemical cell comprises an aqueous electrolyte, sodium-ion system using a sodium manganese oxide (e.g., Na₄Mn₉O₁₈) as the cathode active material and a high surface area or nanoscale carbon (e.g., activated carbon) as the anode active material. The electrochemical cell can also comprise an aqueous electrolyte, sodium-ion system using λ-MnO₂ as the cathode active material and a high surface area or nanoscale carbon (e.g., activated carbon) as the anode active material. These combinations of materials can provide high power and long life at relatively low cost.

In some embodiments the electrode active material is present as a nanoscale, nanoparticle, or nanostructured form. This can facilitate the formation of stable liquid suspensions of the storage compound, and improves the rate of reaction when such particles are in the vicinity of the current collector. The nanoparticulates may have equiaxed shapes or have aspect ratios greater than about 3, including nanotubes, nanorods, nanowires, and nanoplatelets. Branched nanostructures such as nanotripods and nanotetrapods can also be used in some embodiments. Nanostructured electrode active materials may be prepared by a variety of methods including mechanical grinding, chemical precipitation, vapor phase reaction, laser-assisted reactions, and bio-assembly. Bio-assembly methods include, for example, using viruses having DNA programmed to template an ion-storing inorganic compound of interest, as described in K. T. Nam, D.W. Kim, P.J. Yoo, C.-Y. Chiang, N. Meethong, P.T. Hammond, Y.-M. Chiang, A.M. Belcher, "Virus enabled synthesis and assembly of nanowires for lithium ion battery electrodes," Science, 312[5775], 885 - 888 (2006).

In redox cells with a semi-solid electrochemically active fluids, too fine a solid phase can inhibit the power and energy of the system by "clogging" the separator film. In one or more embodiments, the semi-solid flowable composition contains very fine primary particle sizes for high redox rate, but which are aggregated into larger agglomerates. Thus in some embodiments, the particles of solid electrode active compound in the positive and/or negative flowable redox compositions are present in a porous aggregate of 1 micrometer to 500 micrometer average diameter.

The energy storage devices can include, in some embodiments, small particles that can comprise a lubricant such as, for example, fluoropolymers such as polytetrafluoroethylene (PTFE).

Electrolytes used in aqueous semi-solid electrochemical cells may comprise an alkaline or alkaline earth salt dissolved in water to a concentration of 0.1M to 10M. The salt used may comprise alkali or alkaline earth metals other than the ion species stored in the intercalation electrode. Thus for lithium and sodium storing electrodes, the electrolyte may contain A₂SO₄, ANO₃, AClO₄, A₃PO₄, A₂CO₃, ACl, ANO₃, and AOH, where A comprises Li, Na, both Li and Na, or K. Alkaline earth salts include but are not limited to CaSO₄, Ca(NO₃)₂, Ca(ClO₄)₂, CaCO₃, Ca(OH)₂, MgSO₄, Mg(NO₃)₂, Mg(ClO₄)₂, MgCO₃, and Mg(OH)₂. The pH of an aqueous electrolyte may be adjusted using methods known to those of ordinary skill in the art, for example by adding OH containing salts to raise pH, or acids to lower pH, in order to adjust the voltage stability window of the electrolyte or to reduce degradation by proton exchange of certain active materials.

In some embodiments, the electrochemically active fluid can comprise a carrier liquid that is used to suspend and transport the solid phase of a semi-solid and/or a redox active ion-storing liquid composition. The carrier liquid can be any liquid that can suspend and transport the solid phase or condensed ion-storing liquid of the flowable redox composition. In some embodiments, the carrier liquid can be an electrolyte or it can be a component of an electrolyte used to transport ions and/or electrons within the electrochemically active fluid.

By way of example, the carrier liquid can be water, a polar solvent such as alcohols or aprotic organic solvents. Numerous organic solvents have been proposed as the components of Li-ion battery electrolytes, notably a family of cyclic carbonate esters such as ethylene carbonate, propylene carbonate, butylene carbonate, and their chlorinated or fluorinated derivatives, and a family of acyclic dialkyl carbonate esters, such as dimethyl carbonate, diethyl carbonate, ethylmethyl carbonate, dipropyl carbonate, methyl propyl carbonate, ethyl propyl carbonate, dibutyl carbonate, butylmethyl carbonate, butylethyl carbonate and butylpropyl carbonate. Other solvents proposed as components of Li-ion battery electrolyte solutions include γ- butyrolactone, dimethoxyethane, tetrahydrofuran, 2-methyl tetrahydrofuran, 1,3-dioxolane, 4-methyl-1,3-dioxolane, diethyl ether, sulfolane, methylsulfolane, acetonitrile, propiononitrile, ethyl acetate, methyl propionate, ethyl propionate, dimethyl carbonate, tetraglyme, and the like. These nonaqueous solvents are typically used as multicomponent mixtures, into which a salt is dissolved to provide ionic conductivity. Exemplary salts to provide lithium conductivity include LiClO₄, LiPF₆, LiBF₄, lithium bis(pentafluorosulfonyl)imide (also referred to as LiBETI), lithium bis(trifluoromethane)sulfonimide (also referred to as LiTFSI), lithium bis(oxalato)borate (also referred to as LiBOB), and the like. As specific examples, the carrier liquid can comprise 1,3-dioxolane mixed with lithium bis(pentafluorosulfonyl)imide, for example, in a mixture of about 70:30 by mass; an alkyl carbonate mixed with LiPF₆; LiPF₆ in dimethyl carbonate DMC (e.g., at a molarity of about 1 M); LiClO₄ in 1,3-dioxolane (e.g., at a molarity of about 2 M); and/or a mixture of tratraglyme and lithium bis(pentafluorosulfonyl) imide (e.g., in a molar ratio of about 1:1).

In some embodiments, the carrier liquid used within an electrochemically active fluid (e.g., to suspend and transport a solid phase or a semi-solid and/or a redox active ion-storing liquid) and/or an electrode active material (e.g., an insoluble solid and/or salt included in the electrochemically active fluid) is selected for its ability to inhibit the formation of a solid-electrolyte interface (SEI). The formation of SEI is a phenomenon known to those of ordinary skill in the art, and is normally present in, for example, primary and secondary lithium batteries. Formation of a thin and stable SEI on the electrode can be desirable in conventional lithium-ion batteries, as it can provide controlled passivation of the electrodes against oxidation reactions (at the positive electrode) or reduction reactions (at the negative electrode) that, if allowed to continue, can consume working lithium in the cell, increase the impedance of the electrodes, introduce safety issues, or degrade the electrolyte. However, in some embodiments described herein, formation of SEI can be undesirable. For example, formation of SEI on conductive particles in the semi-solid suspension or on the surfaces of the electrode current collectors can decrease cell performance, as such films are generally electronically insulating, and can increase the internal resistance of said electrochemical cell. Thus, it can be advantageous to select carrier liquids and/or electrode active materials that minimize SEI formation at the working potential of the positive and/or negative electrochemically active fluid. In some embodiments, the same composition (e.g., carrier fluid, salt, and/or solid electrode active material) is used in both the positive electrochemically active fluid and the negative electrochemically active fluid, and is selected to have an electrochemical stability window that includes the potentials at both electrodes or electrode current collectors of the energy storage device. In other embodiments, the components of the positive and negative electrochemically active fluid (e.g., carrier fluid, salt, and/or solid electrode active material) are separately chosen and used to enhance the performance of the positive and/or negative electrochemically active fluids (and their respective electrode current collectors). In such cases, the electrolyte phase of the semi-solid positive and negative electrochemically active fluids may be separated in the electrochemical cell by using a separation medium (e.g., a separator membrane) that is partially or completely impermeable to the carrier liquids, while permitting facile transport of the working ion between positive and negative electrochemically active fluids. In this way, a first carrier liquid can be used in the positive electrode compartment (e.g., in the positive electrochemically active fluid), and a second, different carrier liquid can be used in the negative electrode compartment (e.g., in the negative electrochemically active fluid).

A variety of carrier liquids can be selected for advantageous use in the negative and/or positive electrochemically active fluids described herein. For example, the carrier liquid may include an ether (e.g., an acyclic ether, a cyclic ether) or a ketone (e.g., an acyclic ketone, a cyclic ketone) in some embodiments. In some cases, the carrier liquid includes a symmetric acyclic ether such as, for example, dimethyl ether, diethyl ether, din-propyl ether, and diisopropyl ether. In some cases, the carrier liquid includes an asymmetric acyclic ether such as, for example, ethyl methyl ether, methyl n-propyl ether, isopropyl methyl ether, methyl n-butyl ether, isobutyl methyl ether, methyl s-butyl ether, methyl t-butyl ether, ethyl isopropyl ether, ethyl n-propyl ether, ethyl n-butyl ether, ethyl i-butyl ether, ethyl s-butyl ether, and ethyl t-butyl ether. In some cases, the carrier liquid includes a cyclic ether including 5-membered rings such as, for example, tetrahydrofuran, 2-methyl tetrahydrofuran, 3-methyl tetrahydrofuran. The carrier liquid can include, in some embodiments, a cyclic ether including 6-membered rings such as, for example, tetrahydropyran, 2-methyl tetrahydropyran, 3-methyl tetrahydropyran, 4-methyl tetrahydropyran.

In some embodiments, the carrier liquid compound includes a ketone. Ketones may be advantageous for use in some embodiments due to their relatively large dipole moments, which may allow for relatively high ionic conductivity in the electrolyte. In some embodiments, the carrier liquid includes an acyclic ketone such as, for example, 2-butanone, 2-pentanone, 3-pentanone, or 3-methyl-2-butanone. The carrier liquid can include, in some cases, a cyclic ketone including cyclic ketones with 5-membered rings (e.g., cyclopentanone, 2-methyl cyclopentanone, and 3-methyl cyclopentanone) or 6-membered rings (e.g., cyclohexanone, 2-methyl cyclohexanone, 3-methyl cyclohexanone, 4-methyl cyclohexanone).

In some embodiments, the carrier liquid can include a diether, a diketone, or an ester. In some embodiments, the carrier liquid can include an acyclic diether (e.g., 1,2-dimethoxyethane, 1,2-diethoxyethane) an acyclic diketone (e.g., 2,3-butanedione, 2,3-pentanedione, 2,3-hexanedione), or an acyclic ester (e.g., ethyl acetate, ethyl propionate, methyl propionate). The carrier liquid can include a cyclic diether, in some embodiments. For example, the carrier liquid can include a cyclic diether including 5-membered rings (e.g., 1,3-dioxolane, 2-methyl-1,3-dioxolane, 4-methyl-1,3-dioxolane), or a cyclic diether including 6-membered rings (e.g., 1,3-dioxane, 2-methyl-1,3-dioxane, 4-methyl-1,3-dioxane, 1,4-dioxane, 2-methyl-1,4-dioxane). The carrier liquid can include a cyclic diketone, in some instances. For example, the carrier liquid can include a cyclic diketone including 5-membered rings (e.g., 1,2-cyclopentanedione, 1,3-cyclopentanedione, and 1H-indene-1,3(2H)-dione), or a cyclic diether including 6-membered rings (e.g., 1,2-cyclohexane dione, 1,3-cyclohexanedione, and 1,4-cyclohexanedione). In some embodiments, the carrier liquid can include a cyclic ester. For example, the carrier liquid can include a cyclic ester including 5-membered rings (e.g., gamma-butyro lactone, gamma-valero lactone), or a cyclic ester including 6-membered rings (e.g., delta-valero lactone, delta-hexa lactone).

In some cases, the carrier liquid may include a triether. In some cases, the carrier liquid may include an acyclic triether such as, for example, 1-methoxy-2-(2-methoxyethoxy)ethane, and 1-ethoxy-2-(2-ethoxyethoxy)ethane, or trimethoxymethane. In some cases, the carrier liquid can include a cyclic triether. In some embodiments, the carrier liquid can include a cyclic triether with 5-membered rings (e.g., 2-methoxy-1,3-dioxolane) or a cyclic triether with 6-membered rings (e.g., 1,3,5-trioxane, 2-methoxy-1,3-dioxane, 2-methoxy-1,4-dioxane).

The carrier liquid compound includes, in some embodiments, a carbonate (e.g., unsaturated carbonates). The carbonates may, in some cases, form an SEI at a lower potential than liquid carbonates conventionally used in commercial lithium batteries. In some instances, acyclic carbonates can be used (e.g., methyl vinyl carbonate, methyl ethynyl carbonate, methyl phenyl carbonate, phenyl vinyl carbonate, ethynyl phenyl carbonate, divinyl carbonate, diethynyl carbonate, diphenyl carbonate). In some instances, cyclic carbonates can be used such as, for example cyclic carbonates with 6-membered rings (e.g., 1,3-dioxan-2-one).

In some embodiments, the carrier liquid includes compounds that include a combination of one or more ethers, esters, and/or ketones. Such structures can be advantageous for use in some embodiments due to their relatively high dipole moments, allowing for high ionic conductivity in the electrolyte. In some embodiments, the carrier liquid includes an ether-ester (e.g., 2-methoxyethyl acetate), an ester-ketone (e.g., 3-acetyldihydro-2(3H)-furanone, 2-oxopropyl acetate), a diether-ketone (e.g., 2,5-dimethoxy-cyclopentanone, 2,6-dimethoxy-cyclohexanone), or an anhydride (e.g., acetic anhydride).

In some cases, the carrier liquid can comprise an amide. Such compounds can be acyclic (e.g., N,N-dimethyl formamide) or cyclic (e.g., 1-methyl-2-pyrrolidone, 1-methyl-2-piperidone, 1-vinyl-2-pyrrolidone).

In some embodiments, 3-methyl-1,3-oxazolidin-2-one can be used as a carrier liquid, in some cases. 3-methyl-1,3-oxazolidin-2-one may be advantageous for use in some embodiments due to its relatively high dipole moment, which would allow for high ionic conductivity in the electrolyte.

In some embodiments, the carrier liquid can include 1,3-dimethyl-2-imidazolidinone, N,N,N',N'-tetramethylurea, or 1,3-dimethyltetrahydro-2(1H)-pyrimidinone. These compounds also include a relatively high dipole moment, which can provide advantages in some embodiments.

In some cases, the carrier liquid includes fluorinated or nitrile compounds (e.g., fluorinated or nitrile derivatives of any of the carrier liquid types mentioned herein). Such compounds may increase the stability of the fluid and allow for higher ionic conductivity of the electrolytes. Examples of such fluorinated compounds include, but are not limited to, 2,2-difluoro-1,3-dioxolane, 2,2,5,5-tetrafluorocyclopentaone, 2,2-difluoro-gama-butyrolactone, and 1-(trifluoromethyl)pyrrolidin-2-one. Examples of such nitrile compounds include, but are not limited to, tetrahydrofuran-2-carbonitrile, 1,3-dioxolane-2-carbonitrile, and 1,4-dioxane-2-carbonitrile.

In some cases, the carrier liquid includes sulfur containing compounds. In some cases, the carrier liquid can include a sulfoxide (e.g., dimethyl sulfoxide, tetrahydrothiophene 1-oxide, 1-(methylsulfonyl)ethylene), a sulfone (e.g., dimethyl sulfone, divinyl sulfone, tetrahydrothiophene 1,1-dioxide), a sulfite (e.g., 1,3,2-dioxathiolane 2-oxide, dimethyl sulfite, 1,2-propyleneglycol sulfite), or a sulfate (e.g., dimethyl sulfate, 1,3,2-dioxathiolane 2,2-dioxide). In some embodiments, the carrier liquid can include a compound with 1 sulfur and 3 oxygen atoms (e.g., methyl methanesulfonate, 1,2-oxathiolane 2,2-dioxide, 1,2-oxathiane 2,2-dioxide, methyl trifluoromethanesulfonate).

The carrier liquid includes, in some embodiments, phosphorous containing compounds such as, for example, phosphates (e.g., trimethyl phosphate) and phosphites (e.g., trimethyl phosphite). In some embodiments, the carrier liquid can include 1 phosphorus and 3 oxygen atoms (e.g., dimethyl methylphosphonate, dimethyl vinylphosphonate).

In some embodiments, the carrier liquid includes an ionic liquid. The use of ionic liquids may significantly reduce or eliminate SEI formation, in some cases. Exemplary anions suitable for use in the ionic liquid include, but are not limited to tetrafluoroborate, hexafluorophosphate, hexafluoroarsenoate, perchlorate, trifluoromethanesulfonate, bis(trifluoromethylsulfonyl)amide, and thiosaccharin anion. Suitable cations include, but are not limited to, ammonium, imidazolium, pyridinium, piperidinium or pyrrolidinium derivatives. The ionic liquid can, in some embodiments, include a combination of any one of the above anions and any one of the above cations.

The carrier liquid includes, in some cases, perfluorinated derivates of any of the carrier liquid compounds mentioned herein. A perfluorinated derivative is used to refer to compounds in which at least one hydrogen atom bonded to carbon atom is replaced by a fluorine atom. In some cases, at least half or substantially all of the hydrogen atoms bonded to a carbon atom are replaced with a fluorine atom. The presence of one or more fluorine atoms in the carrier liquid compound may, in some embodiments, allow for enhanced control over the viscosity and/or dipole moment of the molecule.

The electrochemically active fluid(s) can include various additives to improve the performance of the flowable redox cell. The liquid phase of the semi-solid in such instances can comprise a solvent, in which is dissolved an electrolyte salt, and binders, thickeners, or other additives added to improve stability, reduce gas formation, improve SEI formation on the negative electrode particles, and the like. Examples of such additives include vinylene carbonate (VC), vinylethylene carbonate (VEC), fluoroethylene carbonate (FEC), or alkyl cinnamates, to provide a stable passivation layer on the anode or thin passivation layer on the oxide cathode; propane sultone (PS), propene sultone (PrS), or ethylene thiocarbonate as antigassing agents; biphenyl (BP), cyclohexylbenzene, or partially hydrogenated terphenyls, as gassing/safety/cathode polymerization agents; or lithium bis(oxatlato)borate as an anode passivation agent.

In some embodiments, the nonaqueous positive and negative electrochemically active fluids are prevented from absorbing impurity water and generating acid (such as HF in the case of LiPF₆ salt) by incorporating compounds that getter water into the active material suspension or into the storage tanks or other plumbing of the system. Optionally, the additives are basic oxides that neutralize the acid. Such compounds include but are not limited to silica gel, calcium sulfate (for example, the product known as Drierite), aluminum oxide and aluminum hydroxide.

In some embodiments, the colloid chemistry and rheology of the semi-solid electrochemically active fluid(s) is adjusted to produce a stable suspension from which the solid particles settle only slowly or not at all, in order to improve flowability of the semi-solid and to minimize any stirring or agitation needed to avoid settling of the electrode active material particles. The stability of the electrode active material particle suspension can be evaluated by monitoring a static slurry for evidence of solid-liquid separation due to particle settling. As used herein, an electrode active material particle suspension is referred to as "stable" when there is no observable particle settling in the suspension. In some embodiments, the electrode active material particle suspension is stable for at least 5 days. Usually, the stability of the electrode active material particle suspension increases with decreased suspended particle size. In some embodiments, the particle size of the electrode active material particle suspension is less than about 10 microns. In some embodiments, the particle size of the electrode active material particle suspension is less than about 5 microns. In some embodiments, the particle size of the electrode active material particle suspension is less than about 2.5 microns.

In some embodiments, conductive additives are added to the electrode active material particle suspension to increase the conductivity and/or stability against particle settling of the suspension. Generally, higher volume fractions of conductive additives such as Ketjen carbon particles increase suspension stability and electronic conductivity, but excessive amount of conductive additives may also excessively increase the viscosity of the suspension. In some embodiments, the flowable redox electrode composition includes thickeners or binders to reduce settling and improve suspension stability.

In some embodiments, the rate of charge or discharge of the electrochemical cell battery is increased by increasing the instant amount of one or both electrode active materials in electronic communication with the current collector. In some embodiments, this is accomplished by making the semi-solid suspension more electronically conductive, so that the reaction zone is increased and extends into the electrode compartment (and, accordingly, into the electrochemically active material). In some embodiments, the conductivity of the semi-solid suspension is increased by the addition of a conductive material. Exemplary electronically conductive materials that can be added include, but are not limited to, metals, metal sulfides, metal carbides, metal borides, metal nitrides, and metal oxides, which can provide a high level of electronic conductivity for a relatively small amount of additive by weight or volume. Other examples of electronically conductive materials that can be added include forms of carbon including carbon black, graphitic carbon powder, carbon fibers, carbon microfibers, vapor-grown carbon fibers (VGCF). In some embodiments, the electronically conductive particles can comprise fullerenes including "buckyballs", carbon nanotubes (CNTs) (e.g., multiwall carbon nanotubes (MWNTs), single wall carbon nanotubes (SWNTs)), graphene (e.g., graphene sheets or aggregates of graphene sheets), and/or materials comprising fullerenic fragments that are not predominantly a closed shell or tube of the graphene sheet, which can provide a high level of electronic conductivity for a relatively small amount of additive by weight or volume. In some embodiments, nanorod or nanowire or highly expected particulates of electrode active materials or conductive additives can be included in the semi-solid electrochemically active suspensions to improve ion storage capacity or power or both. As an example, carbon nanofilters such as VGCF (vapor growth carbon fibers), multiwall carbon nanotubes (MWNTs) or single-walled carbon nanotubes (SWNTs), may be used in the semi-solid electrochemically active suspension to improve electronic conductivity, or optionally to store the working ion.

The electronically conductive particles within the electrochemically active fluid can be, in some embodiments, nanoscale particles. The nanoscale particles can have at least one cross-sectional dimension of less than about 1 micron (and in some cases, at least one cross-sectional dimension of less than about 100 nm or less than about 10 nm). In some embodiments, the nanoscale particles have a maximum cross-sectional dimension of less than about 1 micron, less than about 100 nm, or less than about 10 nm. Without wishing to be bound by any particular scientific interpretation, the use of nanoscale particles as the electronically conductive particles allows for the formation of electronically conductive continuous (percolating) networks at relatively low volume fractions of the conductive additive, for example by diffusion-limited cluster aggregation or similar mechanisms.

In some embodiments, the conductivity of the electrochemically active fluid is increased by coating a solid in the semi-solid electrochemically active fluid with a conductive coating material which has higher electron conductivity than the solid. Non-limiting examples of conductive-coating material include carbon, a metal, metal carbide, metal nitride, metal oxide, or conductive polymer. In some embodiments, a solid of the semi-solid electrochemically active fluid is coated with metal that is redox-inert at the operating conditions of the energy storage device. In some embodiments, the solid of the semi-solid electrochemically active fluid is coated with copper to increase the conductivity of the electrode active material particle, to increase the net conductivity of the semi-solid, and/or to facilitate charge transfer between electrode active material particles and conductive additives. In some embodiments, the electrode active material particle is coated with, about 1.5% by weight, metallic copper. In some embodiments, the electrode active material particle is coated with, about 3.0% by weight, metallic copper. In some embodiments, the electrode active material particle is coated with, about 8.5% by weight, metallic copper. In some embodiments, the electrode active material particle is coated with, about 10.0% by weight, metallic copper. In some embodiments, the electrode active material particle is coated with, about 15.0% by weight, metallic copper. In some embodiments, the electrode active material particle is coated with, about 20.0% by weight, metallic copper. In general, the cycling performance of the electrochemically active fluid increases with the increases of the weight percentages of the conductive coating material. In general, the capacity of the electrochemically active fluid also increases with the increases of the weight percentages of the conductive coating material.

In some embodiments, the rate of charge or discharge of the energy storage device is increased by adjusting the interparticle interactions or colloid chemistry of the semi-solid to increase particle contact and the formation of percolating networks of the electrode active material particles. In some embodiments, the percolating networks are formed in the vicinity of the current collectors.

As noted elsewhere, the electrode current collector can be electronically conductive and should be substantially electrochemically inactive under the operation conditions of the cell. The electrode current collector can be in the form of a sheet, a mesh, or any other configuration for which the current collector may be distributed in the electrode compartment while permitting operation.

One of ordinary skill in the art, given the present disclosure, would be capable of selecting suitable electrode current collector materials. Electrode current collector materials can be selected to be stable at the operating potentials of the positive and negative electrodes of the electrochemical cell. In nonaqueous lithium systems the positive electrode current collector may comprise aluminum, or aluminum coated with conductive material that does not electrochemically dissolve at operating potentials of 2.5-5V with respect to Li/Li⁺. Such materials include Pt, Au, Ni, conductive metal oxides such as vanadium oxide, and carbon. The negative electrode current collector may comprise copper or other metals that do not form alloys or intermetallic compounds with lithium, carbon, and coatings comprising such materials on another conductor.

In aqueous Na⁺ and Li⁺ electrochemical cells, the positive electrode current collector may comprise stainless steel, nickel, nickel-chromium alloys, aluminum, titanium, copper, lead and lead alloys, refractory metals, and noble metals. The negative electrode current collector may comprise stainless steel, nickel, nickel-chromium alloys, titanium, lead oxides, and noble metals. In some embodiments, the electrode current collector comprises a coating that provides electronic conductivity while passivating against corrosion of the metal. Examples of such coatings include, but are not limited to, TiN, CrN, C, CN, NiZr, NiCr, Mo, Ti, Ta, Pt, Pd, Zr, W, FeN, and CoN.

The ion-exchange medium through which ions are transported within the energy storage device can include any suitable medium capable of allowing ions to be passed through it. In some embodiments, the ion-exchange medium can comprise a membrane. The membrane can be any conventional membrane that is capable of ion transport. In some embodiments, the ion-exchange medium is a liquid-impermeable membrane that permits the transport of ions therethrough, such as a solid or gel ionic conductor. In other embodiments, the ion-exchange medium is a porous polymer membrane infused with a liquid electrolyte that allows for the shuttling of ions between the anode compartment and the cathode compartment, while preventing the transfer of electrons. In some embodiments, the ion-exchange medium is a microporous membrane that prevents particles forming the positive and negative electrode flowable compositions from crossing the membrane. Exemplary ion-exchange medium materials include polyethyleneoxide (PEO) polymer in which a lithium salt is complexed to provide lithium conductivity, or Nafion^{™} membranes which are proton conductors. For example, PEO based electrolytes can be used as the ion-exchange medium, which is pinhole-free and a solid ionic conductor, optionally stabilized with other membranes such as glass fiber separators as supporting layers. PEO can also be used as a slurry stabilizer, dispersant, etc. in the positive or negative flowable redox compositions. PEO is stable in contact with typical alkyl carbonate-based electrolytes. This can be especially useful in phosphate-based cell chemistries with cell potential at the positive electrode that is less than about 3.6 V with respect to Li metal. The operating temperature of the redox cell can be controlled (e.g., increased and/or decreased) as necessary to improve the ionic conductivity of the ion-exchange medium.

The energy storage devices described herein can exhibit a relatively high specific energy. In some embodiments, the energy storage device has a relatively high specific energy at a relatively small total energy for the system, for example a specific energy of more than about 150 Wh/kg at a total energy of less than about 50 kWh, or more than about 200 Wh/kg at total energy less than about 100 kWh, or more than about 250 Wh/kg at total energy less than about 300 kWh.

The following reference examples are intended to illustrate certain embodiments of the present invention, but do not exemplify the full scope of the invention.

### REFERENCE EXAMPLE 1

This reference example describes the preparation of the materials used to perform the electrochemical cell tests described in reference Examples 3-8. Table 1 includes a summary of the materials used for various components of the electrochemical cells.

**Table 1. Materials used in experiments described in reference Examples 3-8.**

| | |
|---|---|
| Cathodes: | - Lithium cobalt oxide (LiCoO₂) from AGC Seimi Chemical Co., Ltd. (Kanagawa, Japan) |
| Anodes: | - Graphite (MCMB: Meso Carbon Micro Beads), from Osaka Gas. Co. |
| | - Lithium titanate (Li₄Ti₅O₇) from Altairnano |
| Carbon Additive: | - Ketjen Black from AkzoNobel |
| Electrolytes: | - 1,3-dioxolane mixed with LiBETI (lithium bis(pentafluorosulfonyl) imide) (70:30 mixture by mass) (mixture abbreviated as DOL) from Novolyte Inc. |
| | - alkyl carbonate mixture with LiPF₆ (SSDE), from A123 Systems |
| | - 1M LiPF₆ in dimethyl carbonate (DMC) from Novolyte Inc. |
| | - 2M LiClO₄ (99.99% pure, battery grade) in 1,3-dioxolane (99.9% pure, anhydrous) (DXL) prepared from chemicals purchased from Sigma Aldrich. |
| Separator | -Celgard 2500 from Celgard LLC. |
| Films: | -Tonen from Tonen Chemical Corporation. |

All of the materials were dried and stored under argon atmosphere in a glove box to prevent contamination with water or air.

Suspension Sonication: The active material and carbon (where applicable) were weighed and mixed in a 20 mL glass vial and the solid mixture was suspended by addition of electrolyte. The resulting suspension was mixed and sonicated in a Branson 1510 ultrasonic bath for a period of time ranging from 20 to 60 minutes, depending on the suspension.

Suspension Milling: For powders in which the particles were aggregated, the suspension preparation included a ball-milling step. Milling balls (Yttria Stabilized Zirconia from Advanced Materials, 5 mm in diameter) were added (50 grams for 20 mL of suspension) after the mixing of the powders with the electrolyte. The resulting mixture was sealed from air and humidity and ball milled for 24 hours in a 500 mL zirconia jar at 300 rpms. The resulting suspension was sonicated for 60 minutes.

Carbon Coating: A mixture of pyromellitic acid (from Sigma Aldrich, 96% purity) and ferrocene (from Sigma Aldrich, 96% purity) in a 6:1 ratio by weight was dissolved in acetone with vigorous stirring. The solution was added to the powder to be coated (93 parts by weight, relative to 1 part by weight ferrocene). The suspension was mixed thoroughly and then allowed to dry at 55°C overnight in air. The dried powder was heated under high purity Ar for 10 hours at 800°C in a quartz tube placed inside a Lindberg/Blue M furnace.

Reduction of LTO: The LTO powder was heated under a gas mixture of Ar and H₂ in a 95:5 ratio at 800°C for 20 hours in a quartz tube placed inside a Lindberg/Blue M furnace. At the end of the reduction, the color of the powder had changed from white to blue.

Copper Coating of Graphite: The graphite particles were cleaned with a 4M solution of nitric acid, then reacted with a 0.1 M SnCl₂ solution in 0.1 M HCl for 2 hours. Afterwards the particles were reacted with 0.0058 M PdCl₂ in 0.1 M HCl for 2 hours before adding 0.24 M CuSO₄ · 5 H₂O in a buffered solution at pH 12 until the solution had changed color from blue to gray. The copper to carbon mass ratio was determined by dissolving the metal on the particles with a solution of 35% nitric acid. The copper content in the resulting solution was determined by Luvak (722 Main St., Boylston MA, 01505) using Direct Current Plasma Emission Spectroscopy conforming to ASTM standard E 1097-07. The Cu:MCMB mass ratio was calculated based on that result.

Gold Coating: In order to reduce the interfacial resistance at the aluminum surface of the parts used in electrochemical testing, the surfaces were coated with gold. The coating was done in a Pelco SC-7 for periods of time from 60 to 300 seconds at 40 mA.

Conductivity Measurements: The conductivities of solid suspensions in electrolyte were measured in both static and flowing conditions in a parallel plate setup. The measuring device was constructed in lab using stainless steel plates (3 mm x 10 mm; 1.6 mm spacing in between the plates) and was connected to the FRA Analyzer of the 1400 Cell Test System. Conductivity was determined by varying the frequency of an AC current from 0. 1 to 10⁶ Hz and analysis of the resulting Nyquist plot of imaginary vs. real parts of the resistance.

Rheological Measurements: The viscosities of particle suspensions in electrolyte were measured inside a glove box using a Brookfield Digital Viscometer, mode DV-II+ Pro Extra. The measurements were conducted as quickly as possible to minimize the degree of solvent evaporation from the suspension and modification of rheological properties. The experimental setup consisted of varying the shear rate between 5 and 35 sec⁻¹ in increments of 5 sec⁻¹. A each shear rate, 30 data points for viscosity were taken over the course of a minute. The resulting data was plotted correlating viscosity to the shear rate applied.

### REFERENCE EXAMPLE 2

This reference example describes the electrochemical cell configurations tested in Reference Examples 3 - 8.

### Half cell

The ability of a suspension to store Li⁺ ions against a Li/Li⁺ electrode was tested in a half-cell setup. The experimental setup consisted of a bottom metal piece with a well on top in which the suspension was placed, a piece of separator film (Tonen) covering the well, a slab of lithium metal pressed against a copper cylinder placed on top of the separator film and a hollow copper cylinder surrounding that part. The hollow cylinder and the bottom metal part were insulated through an O-ring made of Fep-encapsulated silicone. The bottom metal part was made of copper alloy 101 for cells operating at potentials in the range 0 to 3 V vs. a Li/Li⁺ electrode and of aluminum alloy 6061 for cells operating in the range 1 to 4.5 V vs. a Li/Li⁺ electrode. Occasionally, aluminum parts were coated with gold to reduce interfacial resistance via the method described in Reference Example 1. The bottom metal part was connected to the positive electrode, while the copper top parts were connected to the negative electrode. The testing was performed using a Solartron Analytical potentiostat operating the 1400 Cell Test System.

### Full cell

The ability to shuttle Li⁺ ions between two different slurries (A and B) was tested in a full cell setup. The experimental setup consisted of a bottom metal piece with a well on top in which suspension A was placed, a piece of separator film (Tonen) covering the well, a metal cylinder placed on top of the separator film with a well filled with suspension B touching the separator film, and a hollow metal cylinder surrounding that part. The top hollow cylinder and the bottom metal part were insulated through an O-ring made of Fep-encapsulated silicone. The metal parts were made of copper alloy 101 for cells operating at potentials in the range 0 to 3 V vs. a Li/Li⁺ electrode and of aluminum alloy 6061 for cells operating in the range 1 to 4.5 V vs. a Li/Li+ electrode. Occasionally, aluminum parts were coated with gold to reduce interfacial resistance via the method described before. The bottom and top metal parts were connected to the positive and negative electrodes of the potentiostat depending on the respective slurries tested. The testing was performed using a Solartron Analytical potentiostat operating the 1400 Cell Test System.

### REFERENCE EXAMPLE 3

This reference example describes the preparation of stable, conductive suspensions, which can be used as a flowable redox active composition. Initial tests showed that the active materials formed stable suspensions only for a limited time and only at high loading volume fractions (45% for LCO, 30% LTO, 35% MCMB). However, when tested in a static cell setup, these suspensions showed very high polarization when charged at relatively low rates (C/20). The low current was assumed to be due to the low conductivity of the suspensions. The addition of conductive carbons (Ketjen Black) had two desired effects: an increase in the electronic conductivity of and stabilization of the suspensions. The direct effect of increase in electronic conductivity was the ability of suspensions to be cycled consistently within a wide range of currents (2.5C - C/20) depending on the ratio of active material to carbon additive.

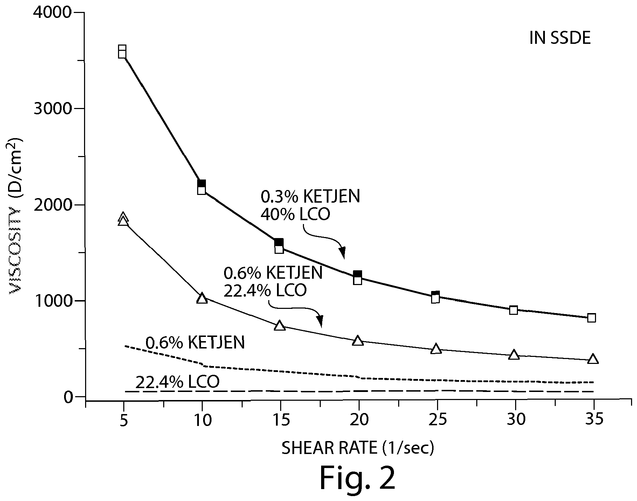

The rheological properties of suspensions of active material (Lithium Cobalt Oxide - LiCoO₂ - LCO) mixed with carbon additive (Ketjen Black) were analyzed. FIG. 2 presents viscosity vs. shear rate data for suspension containing just LCO, just Ketjen Black, and mixtures of the two indifferent ratios. The data suggest that mixing the two solid components creates particulate networks, in which LCO particles are connected by Ketjen aggregates. This results is consistent with qualitative observations which correlated the suspension stability with increased carbon content and increased viscosity. Subsequent tests of mixtures with other active materials (lithium titanate, graphite) and other electrolyte systems (DOL) showed similar trends of viscosity vs. shear rate.

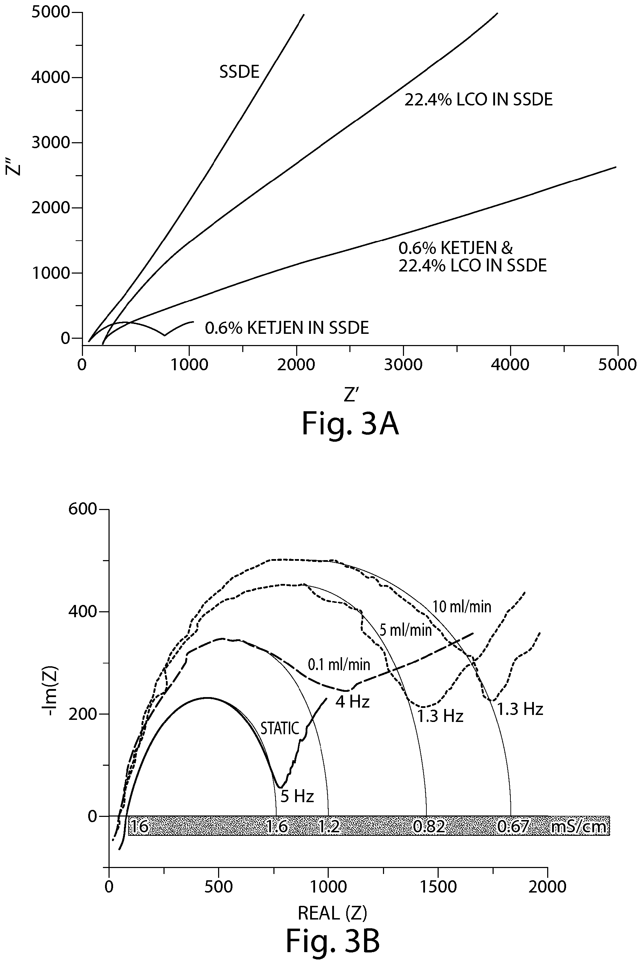

The electronic conductivities of lithium cobalt oxide (LCO) and Ketjen suspensions were determined under both static and flowing conditions. FIG. 3A presents Nyquist plots correlating the imaginary vs. real parts of the resistance of the suspensions in AC testing conditions. Under static conditions, the conductivity of the electrolyte appears to dominate the overall conductivity of the suspensions, except for those containing only carbon additive. That specific suspension was also tested under flow conditions with increasing flow velocity. The results, presented in FIG. 3B showed that as the flow rate was increased, the electronic conductivity of the suspension decreased most likely because the available percolation paths were disrupted.

### REFERENCE EXAMPLE 4

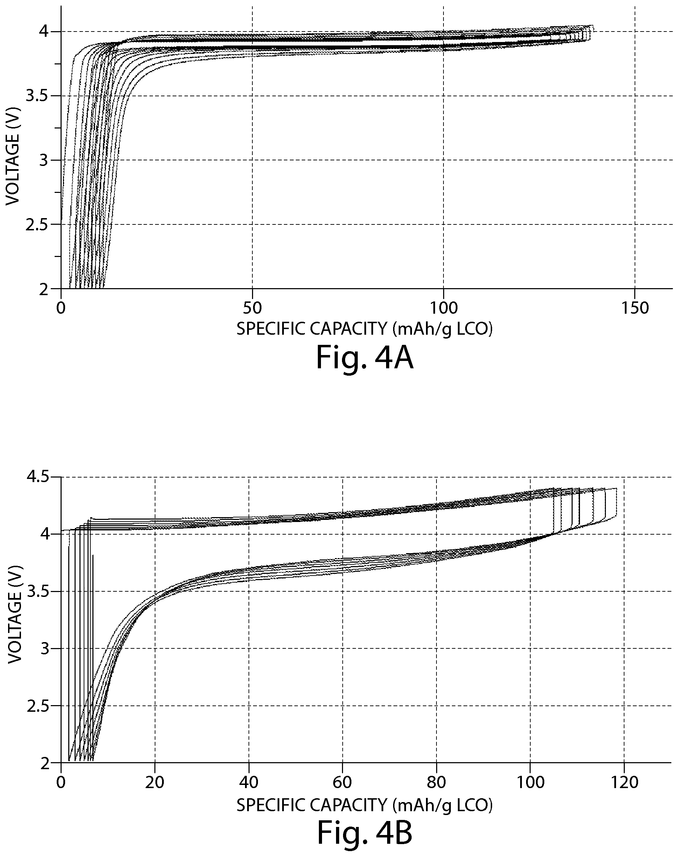

The ability of stable suspensions to shuttle lithium ions while under zero flow was tested in a static cell setup. In this type of experiment, the suspension filled a well which was covered with a separator film, then capped by a Li/Li⁺ electrode. Not wishing to be bound by any particular theory, it was believed that a percolating network was formed in the suspension through which all of the active material in the cell is connected to the current collector. FIGS. 4A-4B show the voltage and charge profiles of two different cathode materials which exhibit excellent cycling behavior.

FIG. 4A represents the first successful cycling of a suspension of lithium cobalt oxide (LiCoO₂ - LCO, as received) mixed with Ketjen Black in organic carbonate electrolyte (SSDE) (Experiment Static-Cathode-1). The graph displays voltage as a function of the capacity of the material, a common performance metric for Li-ion battery materials. The flat plateaus on both charge and discharge suggest that the electrochemical reaction is highly reversible, while the operating voltage is close to 3.9 V vs. Li/Li⁺, the expected value for an lithium cobalt oxide (LCO) cathode. The hysteresis of the charge and discharge voltage curves is small, which translates into a high energy efficiency. The charge rate of the cell is C/20, meaning that at the current running through the cell, the material will be fully charged in 20 hours. A discharge of D/20 represents the rate at which the cell fully discharges in 20 hours. Overall, this represents an excellent result, showing the ability of a cathode mixture to charge and discharge, while remaining suspended.

Comparatively, FIG. 4B represents the cycling behavior of a different lithium cobalt oxide mixture at significantly higher rates (Experiment Static-Cathode-2). The main difference in suspension composition is due to jet milling of the lithium cobalt oxide (LCO) powder, which allowed more active material to be suspended. Also, less carbon additive was needed for the suspension to be able to cycle in a static cell setup. The rate at which this cell can be operated is C/3.2 and D/3.2, which suggests that these materials are suitable for high power applications with short discharge times. There is significantly more hysteresis in the charge vs. discharge voltage curves as the polarization (a sum of the internal resistances in the cell) is increased because of operation at higher currents. The reversible capacity is also decreased from the theoretical limit of 140 mAh/g LCO to 105 mAh/g LCO. At these rates, both the lower energy efficiency and lower reversible capacity are expected, as they are common for Li-ion battery materials. However, the discharge voltage is still high (>3.5 V for 80% of the reversible capacity), and the voltage plateaus are still considerably flat, which supports the use of these materials in high power applications.

**Table 2. Description of experimental setup of test Static-Cathode-1. LCO was used as received.**

| Test type: half static cell | | Current collector: Aluminum | | Separator film: Celgard | |
|---|---|---|---|---|---|
| Suspension composition: | | Coating: N/A | | Test cell characteristics: | |
| Volumetric | By mass: | Suspension characteristics: | | Well depth | 0.3 mm |
| 12.0 % LCO | 35.1 % LCO | Theoretical energy density: | | Cell volume | 9.5 µL |
| 1.5 % Ketjen | 1.8 % Ketjen | Volumetric | 84.2 mAh/mL | Theoretical capacity | 0.80 mAh |
| 86.5 % SSDE | 63.1 % SSDE | Gravimetric | 45.4 mAh/g | C rate @ 40 µA | C/20 |

**Table 3. Description of experimental setup of test Static-Cathode-2. LCO was jet milled.**

| Test type: half static cell | | Current collector: Aluminum | | Separator film:Celgard | |
|---|---|---|---|---|---|
| Suspension composition: | | Coating**:** N/A | | Test cell characteristics: | |
| Volumetric | By mass: | Suspension characteristics | | Well depth | 0.55 mm |
| 26.0 % **LCO** | 56.1 % **LCO** | Theoretical energy density: | | Cell volume | 17.4 µL |
| 0.8 % Ketjen | 0.7 % Ketjen. | Volumetric | 182.4 mAh/mL | Theoretical capacity | 3.17 mAh |
| 73 2 % SSDE | 43.2 % **SSDE** | Gravimetric | 78.6 mAh/g | C rate @ 1000 µA | C/3.2 |

The main target of static cell experiments was to determine how well the cathode materials cycle while being suspended in a carbon and electrolyte mixture. However, in these tests, the active material is tested in a shallow well covered by separator film and capped by a Li slab as the Li electrode. Because of the design of the cell, the active material could potentially settle at the bottom of the test well. A settled "cake" of active material could have been cycled without the need of a percolating network throughout the suspension. For this reason, a modified half cell static test was done in which the test well had been inverted and was facing downwards. In the modified setup, settling of the active material in the suspension would have determined disconnection from the current collector above. The viscosity of the suspensions was found to increase with an increase in the content of carbon additives. Therefore a suspension with a higher loading of carbon was prepared and tested to avoid leakage out of the test well.

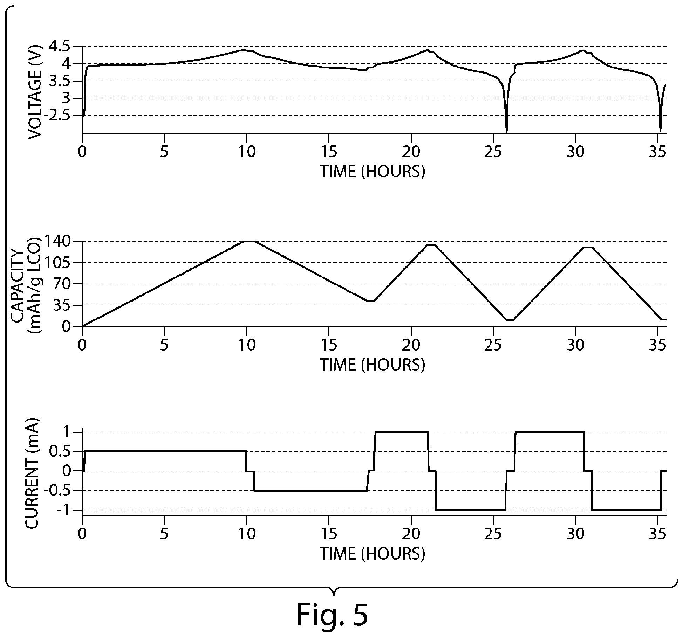

FIG. 5 shows the voltage, charge and current profiles vs. time for a suspension with the composition 40% lithium cobalt oxide (LCO) and 1.5% Ketjen in the inverted static cell setup (experiment Static-Cathode-3). The top plot represents the voltage of the cell against a Li/Li⁺ electrode, as a function of time. The operating voltage of the cell is in the 3.7 - 4.2 V, as expected for a lithium cobalt oxide cell. The middle plot represents the capacity of the material in the cell, per gram of active material (LCO) used. The cell manages to charge to almost full theoretical capacity (140 mAh/g LCO), and has an excellent reversible discharge capacity (120 mAh/g LCO). The bottom plot represents the current running through the cell as a function of time. The graph shows that the cell can charge to more than 80% capacity at both C/10 and C/5 rates. In this experiment, the time component of the data is very significant, as it shows that over several tens of hours, the suspension is still stable, in spite of the inverted cell setup. For this reason, the voltage, specific capacity, and current were plotted as functions of time on the same time axis. This result confirms that the active material does not settle out, but remains suspended.

**Table 4. Description of experimental setup of test Static-Cathode-3.**

| Test type: half static cell | | Current collector: Aluminum | | Separator film: Celgard | |
|---|---|---|---|---|---|
| Suspension composition: | | Coating: Au sputtered (120 s @ 40 mA) | | Test cell characteristics: | |
| Volumetric | By mass: | Suspension characteristics | | Well depth | 0.62 mm |
| 36.0 % LCO | 67.0 % LCO | Theoretical energy density: | | Cell volume | 20.1 µL |
| 1.5 % Ketjen | 1.2 % Ketjen | Volumetric | 252.5Ah/L | Theoretical capacity | 5.07 mAh |
| 62.5 % SSDE | 31.8 % SSDE | Gravimetric | 93.4Ah/kg | C rate @ 1000 µA | C/5 |

### REFERENCE EXAMPLE 5

Static tests of anode materials revealed the importance of SEI formation on the stability of suspensions and their potential use in solid suspension cells. Carbonate solvents are known to form a stable solid electrolyte interface, which is non-electrically conductive. For the proposed suspension cell system, the coating of suspended particles with a non-conductive layer was considered to be detrimental as they could no longer charge or discharge in contact with the current collector.

Therefore, a non-carbonate electrolyte was used in the testing of anode materials in suspension. The electrolyte of choice was a mixture of 1,3-dioxolane and LiBETI salt in a 70:30 mass ratio (DOL). Compared to carbonate electrolytes, which begin forming an SEI at ~1.5 V, DOL mixed with LiBETI is chemically stable down to ~1.0V, which made lithium titanate (Li₄Ti₅O₁₂ - LTO)(lithiation potential = 1.55 V vs. Li/Li⁺) the material of choice for anode tests. The low conductivity of bulk lithium titanate (σ = 1.0 × 10⁻¹³ S cm⁻¹) was assumed to be detrimental to the ability of the anode suspension to cycle at high rates. Hence, several processing techniques were used in an attempt to increase electronic conductivity. The most successful method to increase conductivity was reduction under a H₂/Ar atmosphere at 800°C. The metric for conductivity increase was taken to be reduction of polarization on the suspension during charging and discharging in a static test cell.

As noted in Reference Example 1, the procedure for reduction of lithium titanate (Li₄Ti₅O₇ - LTO) was adapted from a similar procedure found in literature. The powder was heated under a gas mixture of Ar and H₂ in a 95:5 ratio at 800°C for 20 hours in a quartz tube placed inside a Lindberg/Blue M furnace. At the end of the reduction, the color of the powder had changed from white to blue.

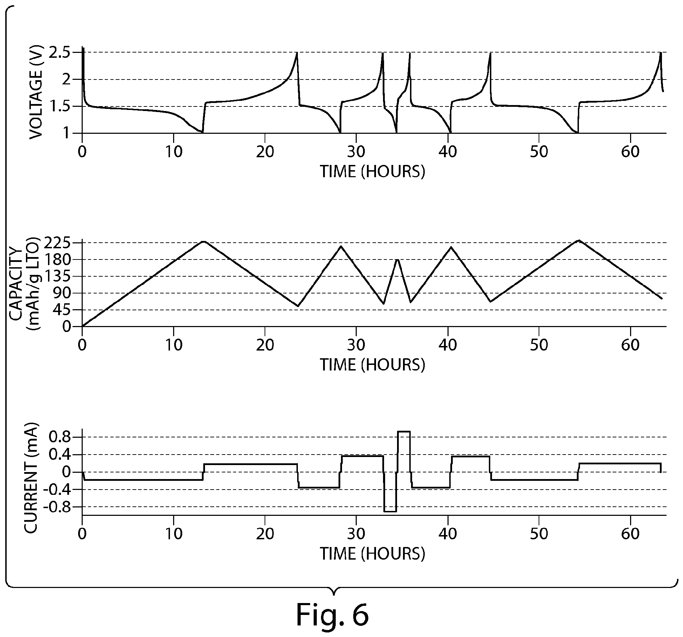

The results of a cycling experiment on a suspension prepared with reduced lithium titanate powder are presented in FIG. 6 (experiment Static-Anode-1). The data is presented in the voltage, capacity and current vs. time format. The voltage curve shows plateaus around the voltage of partially charged lithium titanate, at 1.55 V, suggesting that the active material is actually being lithiated and delithiated. The capacity curve shows that the charge capacity exceeds the maximum theoretical capacity of lithium titanate (170 mAh/g), which can be explained by undesired decomposition reactions of the electrolyte during charge. However, the material shows significant (~120 mAh/g LTO) reversible capacity even at high rates (C/1.8 and D/1.8). The current profile shows repeated charge and discharge steps at the following rates: C/9, D/9, C/4.5, D/4.5, C/1.8, D/1.8, C/5, D/5, C/9, D/9. The scope of this type of charge / discharge experimental schedule is to determine the reversible capacity of the material at high rates, and how much of that capacity is still available when the material is cycled again at low rates. The data confirms lithium titanate as a promising anode material in a dioxolane-based electrolyte. Moreover, the reduction of the material allows the suspension to be cycled at high rates while retaining significant reversible capacity. This data represents the first successful cycling of a lithium titanate mixture with carbon additive and dioxolane electrolyte (DOL), while remaining a stable suspension.

**Table 5. Description of experimental setup of test Static-Anode-1. The active material used was reduced Altairnano LTO.**

| Test type: half static cell | | Current collector: Aluminum | | Separator film: Tonen | |
|---|---|---|---|---|---|
| Suspension composition: | | Coating: Au sputtered (300 s @ 40 mA) | | Test cell characteristics: | |
| Volumetric | By mass: | Suspension characteristics | | Well depth | 0.5 mm |
| 20.0 % LCO red | 38.6 % LTO red | Theoretical energy density: | | Cell volume | 15.8 µL |
| 0.6 % Ketjen | 0.7 % Ketjen | Volumetric | 117.6Ah/L | Theoretical capacity | 1.83 mAh |
| 79.4 % DOL | 60.7 % DOL | Gravimetric | 65.7 Ah/kg | C rate @ 1000 µA | C/1.8 |

The carbonate solvents used in common electrolytes have slightly different stabilities with respect to SEI formation. Acyclic molecules, such as dimethyl carbonate and ethyl methyl carbonate, have been found to be more stable than cyclic ones, such as ethylene and propylene carbonate. A more stable electrolyte was prepared by using only 1M LiPF₆ in dimethyl carbonate (DMC). A combination of DMC as the electrolyte in the suspension and more conservative voltage cutoff limits for the charge / discharge experiment allowed a lithium titanate (LTO) suspension to cycle statically in a carbonate solvent.

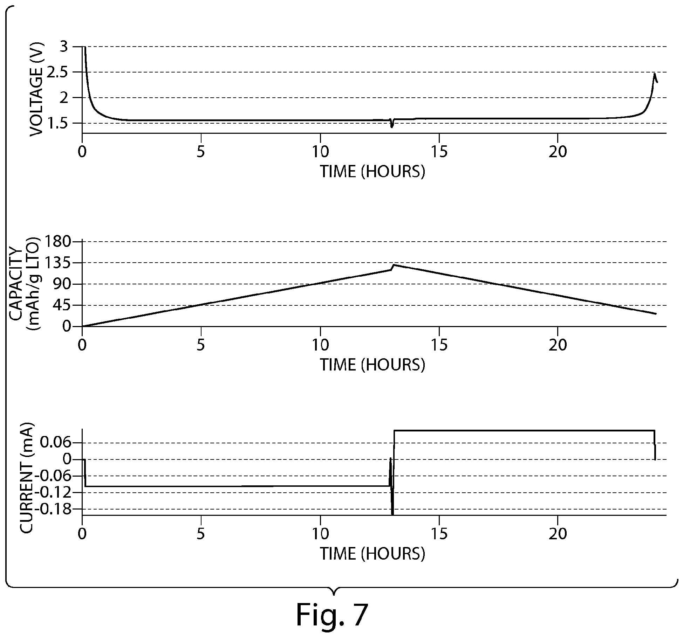

FIG. 7 shows the voltage, capacity and current vs. time profiles for a suspension of Altairnano lithium titanate in dimethyl carbonate electrolyte (concentration: 1M LiPF₆, abbreviated as DMC) (experiment Static-Anode-2). The voltage profile shows that the polarization during charge and discharge is very low (>0.1 V), which is most likely due to the shallow testing well as well as the high carbon content of the suspension. The maximum capacity reached during charge is less than the maximum theoretical capacity, but this is expected because of the high voltage cutoff (1.4 V). In this testing setup, the voltage of the suspension was not allowed to go below 1.4 V, to prevent decomposition of the DMC electrolyte. The high voltage cutoff limited the polarization that could be applied to the suspension and reduced the available capacity at C/18 rate. The current profile shows a small peak upon charge due to a different charge step at a higher rate, which was cut short to prevent solvent decomposition.

The ability of lithium titanate to charge and discharge in DMC electrolyte while remaining a stable suspension is a highly significant result. Because DMC (dimethyl carbonate mixed with LiPF₆) is an organic carbonate electrolyte, it is stable at higher voltages up to 4.5 V vs. Li, at which lithium cobalt oxide cycles. Therefore DMC electrolyte can be used as the single electrolyte in a full cell employing lithium cobalt oxide as the cathode and lithium titanate as the anode in their respective suspensions. Discovering an electrolyte which allows cycling of stable anode and cathode suspension is a step forward toward a full cell with flowable suspensions on both sides.

**Table 6. Description of experimental setup of test Static-Anode-2.**

| Test type: half static cell | | Current collector: Aluminum | | Separator film: Celgard | |
|---|---|---|---|---|---|
| Suspension composition: | | Coating: Au sputtered (120 s @ 40 mA) | | Test cell characteristics: | |
| Volumetric | By mass: | Suspension characteristics | | Well depth | 0.5 mm |
| 20.0 % LTO | 38.2 % LTO | Theoretical energy density: | | Cell volume | 15.8 µL |
| 1.0 % Ketjen | **1.3** % Ketjen | Volumetric | 117.6Ah/L | Theoretical capacity | 1.85 mAh |
| 79.0 % DMC | 60.5 % DMC | Gravimetric | 65.4Ah/kg | C rate @ 100 µA | C/18 |

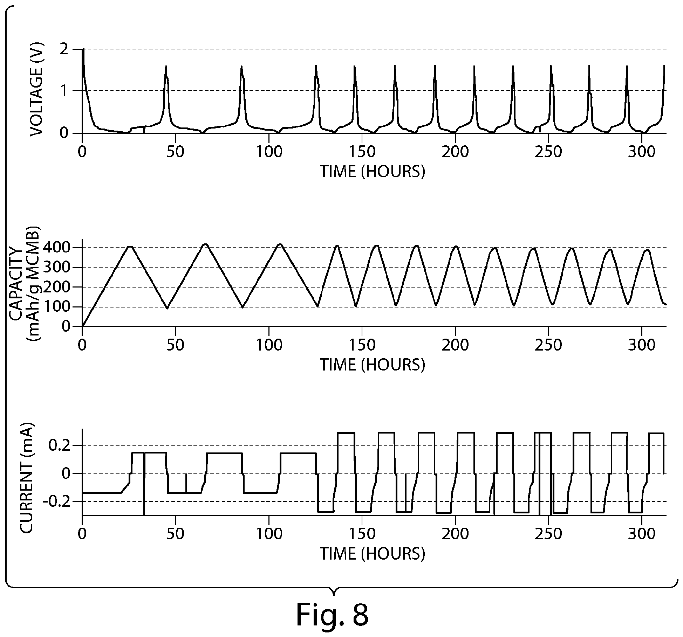

As the driving force for SEI formation is higher at potentials close to that of the Li/Li⁺ electrode, graphite (lithiation potential = 0.1 V vs. Li/Li⁺) was assumed to be more affected by SEI formation than lithium titanate. FIG. 8 represents the voltage, capacity and current vs. time results of a test of copper coated graphite (Cu-MCMB: Meso Carbon Micro Beads) in SSDE electrolyte (organic carbonate mixture with LiPF₆ salt) (experiment Static-Anode-3). Reference Example 1 includes a description of the process used to coat the graphite with copper. The content of copper in the MCMB was 2% by mass. Using copper coated graphite (MCMB) was found to decrease the amount of solid electrolyte interface (SEI) compared to as received graphite. The experiment revealed significant irreversible lithium consumption, consistent with SEI formation and typical for the anode material behavior in regular Li-ion batteries. However, analysis of the suspension after the charge / discharge test revealed that the material had transformed from a viscous suspension to a hard, almost dry cake.

**Table 7. Description of experimental setup of test Static-Anode-3.**

| Test type: half static cell | | Current collector: Copper | | Separator film: Celgard | |
|---|---|---|---|---|---|
| | | Coating: N/A | | Test cell characteristics: | |
| Suspension composition: | | Suspension characteristicks | | Well depth | 0.28 mm |
| Volumetric | By mass: | Theoretical energy density: | | Cell volume | 8.9 µL |
| 40.4% Cu-MCMB | 52.2 % Cu-MCMB | Volumetric | 302.2Ah/L | Theoretical capacity | 2.86 mAh |
| 59.6 % **SSDE** | 47.8 % SSDE | Gravimetric | 177.8Ah/kg | C **rate** @ 286 µA | C/10 |

### REFERENCE EXAMPLE 6

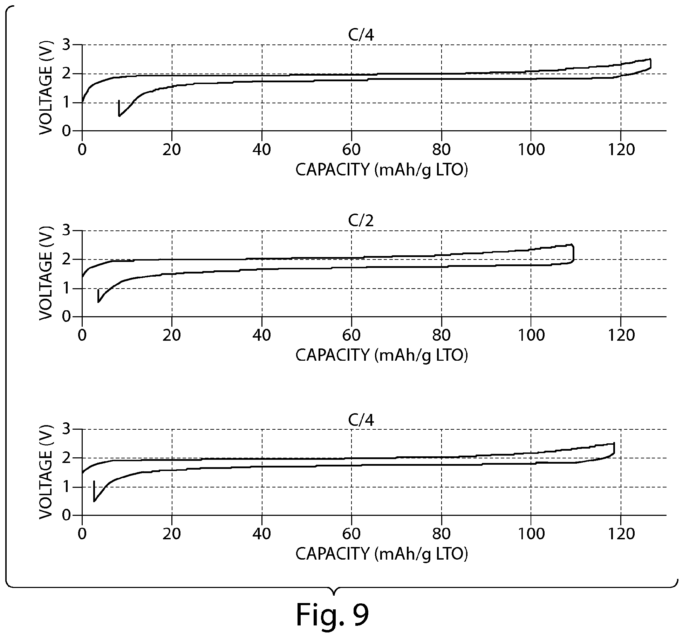

This reference example describes a full lithium-ion cell made using stable semi-solid suspensions at both the cathode and the anode, tested in a non-flowing configuration. This cell used two different electrolytes in the cathode and anode suspensions, separated by Tonen separator. The cathode composition consisted of 20 vol% of a an iron-based olivine powder (A123 Systems, Watertown, MA) with 1 vol% Ketjen, in electrolyte consisting of 1.3M LiPF₆ in alkyl carbonate blend. The anode contained 6 vol% Li₄Ti₅O₁₂ (AltairNano, Reno, Nevada) and 1 vol% Ketjen in a 70:30 mixture by mass of 1,3-dioxolane and LiBETI (lithium bis (pentafluorosulfonyl) imide. Since the cell is anode-limited, the cell capacities are normalized to show the reversible capacity of the anode, as shown in FIG. 9. The 2nd through 4th charge/discharge cycles are shown, conducted at C/4, C/2, and C/4 rates, respectively. The cell voltage of 1.9V is expected from this combination, and the polarization is quite low, as is evident from the small voltage hysteresis. These data are very similar to those for a conventional lithium ion cell that uses the same active materials in high-pressure calendared electrode coatings. The corresponding coulombic and energy efficiencies are high, being 97-98% and 87-88% respectively.

### REFERENCE EXAMPLE 7

The next step after demonstrating that static suspensions can cycle reliably against Li/Li⁺ electrodes was operating a full cell coupling an anode suspension with a cathode suspension. The main issue regarding this test was the stability of the electrolyte on the anode side. Since experiments had proven that SSDE electrolyte is stable in the 1.5 to 4.5 V interval, while DOL is stable in the 1.0 to 3.3 V interval, a full static cell test was envisioned using the two different electrolytes on the two sides. However, the cathode material of choice was LFP, which undergoes a reversible delithiation reaction upon charging around 3.4 V. For the most successful anode electrolyte, DOL, the degradation was found to be much slower around 3.4 V compared to 3.9 V. Therefore, in the case that the two electrolytes were to mix, an LFP-LTO full cell would be stable for a longer time than a LCO-LTO cell.

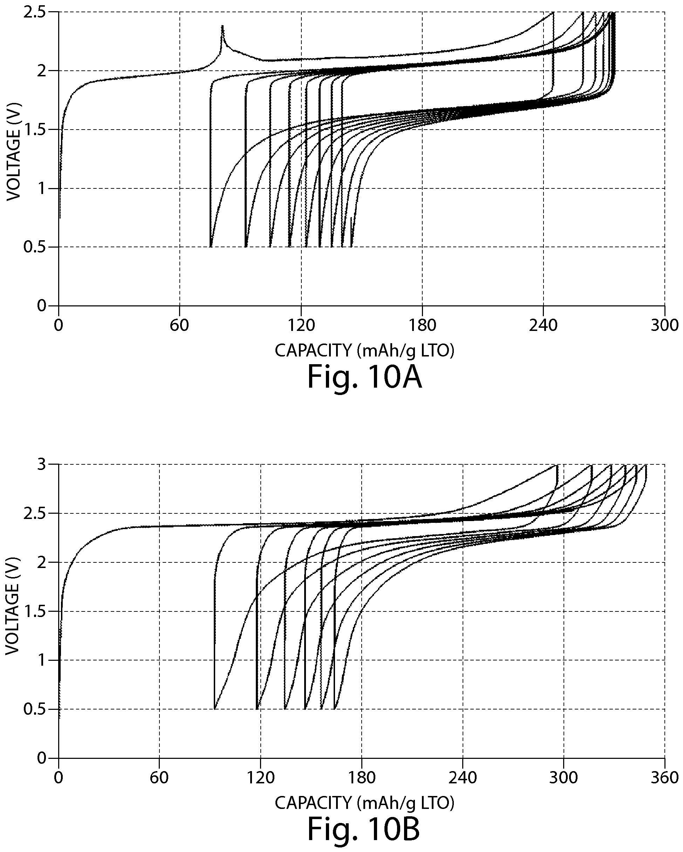

FIG. 10A shows the voltage vs. capacity of a full cell with Nanophosphate^{™} (abbreviated LFP) (suspended in SSDE electrolyte) against LTO (suspended in DOL electrolyte) (experiment Full-Static-1). This result shows the ability of two suspensions to function as anode and cathode in the proposed electrochemical cell. The data is presented as a profile of cell voltage as a function of the capacity of the anode. Because of the lower loading limit of lithium titanate in electrolyte, compared to Nanophosphate^{™} , the cell was capacity limited on the anode side. The voltage plateaus are in the correct range (~1.9 V, the difference in the operating potentials of the two components). There is some irreversible capacity loss during the first cycle, perhaps due to the decomposition of the solvents which had crossed over to the opposite electrode. Considering the discharge rate of D/5 for the anode, the polarization is to be expected, as well as the reduced reversible capacity. This result suggests the possibility of operating a 2-electrolyte full cell, using a robust separator film to prevent solvent mixing.

The two-electrolyte system had several disadvantages, including low operating voltage (<2 V) and poor stability. In some cases, the solvents on the two sides were found to mix and undergo decomposition reactions. The solution to these problems was using a single electrolyte which was electrochemically stable in the operating voltage range of the cell. An immediate candidate was DMC (1M LiPF₆ in dimethyl carbonate) which allowed LTO to cycle at low polarization. Also, DMC is a carbonate solvent which had been proven to be stable above 4.0 V, at the charge voltages of LCO. The LCO-LTO couple is expected to have a discharge voltage above 2 V and good stability as long as the LTO is kept above 1.3-1.4 V vs. a Li/Li⁺ electrode.

**Table 8. Description of experimental setup of test Full-Static-1.**

| Type: full static cell | | Separator film: Tonen | | Side | | |
|---|---|---|---|---|---|---|
| Cathode current collector: Al | | Coating: Au (300 s @ 40 mA) | | Position | Top | Bottom |
| Anode current collector: Al | | Coating: Au (300 s @ 40 mA) | | Active material | LFP | LTO |
| | | | | Electrolyte | SSDE | DOL |
| | | | | Volumetric capacity | 104.0Ah/L | 99.9 Ah/L |
| Cathode composition | | Anode composition | | Specific capacity | 59.3 Ah/kg | 57.7 Ah/kg |
| Volumetric | By mass: | Volumetric | By mass: | cell depth | 0.63 mm | 0.5 mm |
| 17.0 % LFP | 34.9 % LFP | 17.0 % LTO | 34.0 % LTO | Cell volume | 20.0 L | 15.8 L |
| 0.9 % Ketjen | 1.1 % Ketjen | 0.9 % Ketjen | 1.1 % Ketjen | Cell capacity | 2.09 mAh | 1.58 mAh |
| 82.1 % SSDE | 64.0 % SSDE | 82.1 % DOL | 64.9 % DOL | C rate @ 300 A | *cn* | C/5 |

FIG. 10B shows the voltage vs. capacity of a full cell using lithium cobalt oxide (LCO) as the cathode and lithium titanate (LTO) as the anode, suspended in DMC, (experiment Full-Static-2). This result demonstrates the ability of anode and cathode materials' suspensions in the same electrolyte to function together in transporting and storing Li⁺ ions. The data is presented as a profile of cell voltage as a function of the capacity of the anode. Because of the lower loading limit of lithium titanate in electrolyte, compared to lithium cobalt oxide, the cell was capacity limited on the anode side. The voltage plateaus are in the correct range (~2.3 V, the difference in the operating potentials of the two components). There is some irreversible capacity loss during the first cycle, most likely due to partial SEI formation. Considering the discharge rate of D/4.5 for the anode, the polarization across the cell is considered relatively low, while the reversible capacity is promising.

The voltage vs. capacity curves for both full cells indicate the problem of side reactions: decomposition in the case of DOL and SEI formation for DMC manifests themselves as irreversible capacities. However, the stability of DMC is considered to be high enough to enable the use of full cells. Considering that DMC was only used with lithium titanate as the anode, alternate anode materials might require a different approach. Two proposed methods are: implementation of a non-porous separator material (polymer or ceramic) which could keep two solvents separated or the use of a solvent which is electrochemically stable in the 0 to 5 V interval.

**Table 9. Description of experimental setup of test Full-Static-2.**

| Type: full static cell | | Separator film: Tonen | | Side | | |
|---|---|---|---|---|---|---|
| Cathode current collector: Al | | Coating: Au (300 s @ 40 mA) | | Position | Top | Bottom |
| Anode current collector: Al | | Coating: Au (300 s @ 40 mA) | | Active material | LCO | LTO |
| | | | | Electrolyte | DMC | DMC |
| | | | | Volumetric capacity | 140.1 Ah/L | 88.2 Ah/L |
| Cathode composition | | Anode composition | | Specific capacity | 65.4 Ah/kg | 52.3 Ah/kg : |
| Volumetric | By mass: | Volumetric | By mass: | Cell depth | 0.3 mm | 0.5 mm |
| 20.0 % **LCO** | 48.1 % LCO | 15.0 % LTO | 30.7 % LTO | Cell volume | 10.3 L | 15.8 L |
| 1.4 % Ketjen | 1.4 % Ketjen | 1.0 % Ketjen | 1.3 % Ketjen | Cell capacity | 1.44 mAh | 1.39 mAh |
| 78.6 % DMC | 50.5 % DMC | 84.0 % DMC | 68.0 % DMC | C rate @ 300 A | C/5 | C/4.5 |

### REFERENCE EXAMPLE 8

The stability of common solvents found in commercial Li-ion batteries is directly dependent on the most polar chemical group found in the molecule. The most stable molecules are, going from 5 to 0 V vs. a Li/Li⁺ electrode: carbonates (such as dimethly carbonate), esters (such as γ-butyrolactone) and ethers (such as 1,2-dimethoxyethane, tetrahydrofurane or 1,3-dioxolane). Considering this data, ethers have been implemented as solvents in electrolytes for testing graphite in the solid suspension electrochemical cell.

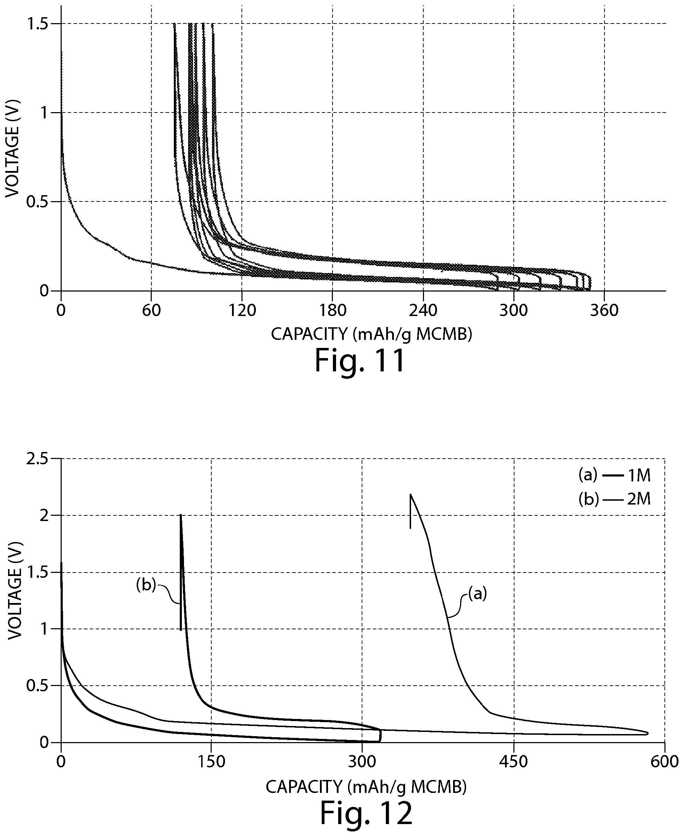

FIG. 11 shows voltage vs. capacity data for a suspension of graphite in 2M LiClO₄ in 1,3-dioxolane (abbreviated as DXL) (experiment Static-Anode-4). The result indicates a 2-electrolyte full cell, in which the anode would be graphite suspended in DXL electrolyte, can be fabricated. The voltage plateaus on charge and discharge are in the right range, around 0.1 V. There is some irreversible capacity exhibited during the first charge step, as some undesired side reactions are occurring.

**Table 10. Description of experimental setup of test Static-Anode-4**

| Test type: half static cell | | Current collector: Copper | | Separator film: Tonen | |
|---|---|---|---|---|---|
| Suspension composition: | | Coating: N/A | | Test cell characteristics: | |
| | | Suspension characteristics | | Well depth | 0.5 mm |
| Volumetric | By mass: | Theoretical energy density: | | Cell volume | 15.8 µL |
| 40.0 % MCMB | 51.8 % MCMB | Volumetric | 299.2 Ah/L | Theoretical capacity | 4.71 mAh |
| 60.0 % DXL | 48.2 % DXL | Gravimetric | 176.0 Ah/kg | C rate @ 600 µA | C/8 |

The ability of MCMB to cycle against a Li/Li⁺ electrode depends not only on the structures of the solvent and the salt, but also on the salt concentration. Higher salt concentrations, which are desired to improve ion mobility, can also help stabilize the ether solvent molecules by coordinating them to the Li⁺ ions. Coordinated solvent molecules are less likely to undergo undesired anodic oxidation reactions which are particularly likely when charging graphite at voltages close to the potential of Li/Li⁺. FIG. 12 shows a comparison of 1M and 2M LiClO₄ in 1,3-dioxolane used as electrolyte for one charge/discharge cycle of graphite.

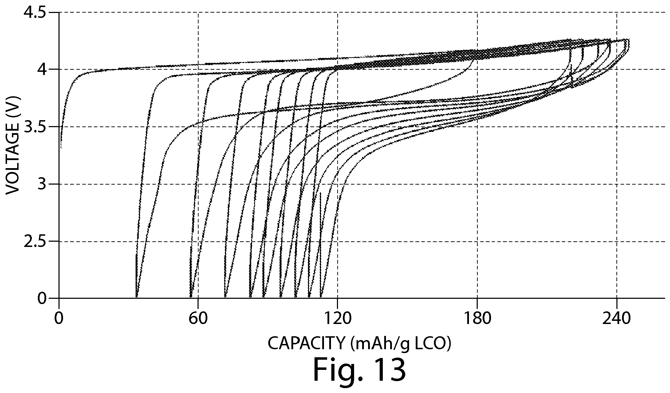

In linear ethers with 4 or more oxygen atoms, the solvent can wrap around the Li⁺ ion to form a more stable coordinated cation. At 1:1 molar ratios of solvent to salt, the product of mixing is an ionic liquid of the formula [Li(ether)](anion). Such ionic liquids have been proven to be electrochemically stable in the 0 to 5 V potential range vs. the Li/Li⁺ electrode, which makes them excellent candidates for implementation 4 V solid suspension electrochemical cells. FIG. 13 shows the voltage vs. capacity curve for lithium cobalt oxide (LCO) tested in a half static cell in an electrolyte composed of tetraglyme and lithium bis(trifluoromethane)sulfonimide in a 1:1 molar ratio ([Li(G4)]TFSI) (experiment Static-Cathode-4). The result proves that lithium cobalt oxide can cycle in this novel electrolyte maintaining significant reversible capacity (120 mAh/g LCO). The polarization is relatively high for the low rates running across the cell (C/11), which is, most likely, due to the lower ionic conductivity of [Li(G4)]TFSI relative to common organic carbonate electrolytes.

**Table 11. Description of experimental setup of test Static-Cathode-4**

| Test type: half static cell | | Current collector: Aluminum | | Separator film: Tonen | |
|---|---|---|---|---|---|
| Suspension composition: | | Coating: Au (300 s @ 40 mA) | | Test cell characteristics: | |
| Volumetric | By mass: | Suspension characteristics | | Well depth | 0.5 mm |
| 10.0% LCO | 28.1% LCO | Theoretical energy density: | | Cell volume | 15.8 µL |
| 3.0% Ketjen | 3.4% Ketjen | Volumetric | 70.1Ah/L | Theoretical capacity | 1.10 mAh |
| 87.0% [Li(G4)]TFSI | 68.5% [Li(G4)]TFSI | Gravimetric | 39.4Ah/kg | C rate @ 600 µA | C/11 |

### REFERENCE EXAMPLE 9

Selection of a suitable cathode-anode-electrolyte depends on the potentials at which the cathode and anode store ions, as well as the stability window of the electrolyte. Table 11 shows several suitable combinations. SSDE refers to LiPF₆ in a mixture of alkyl carbonates; DMC refers to LiPF₆ in dimethyl carbonate; DXL refers to 2M LiClO₄ in 1,3-dioxolane; DOL refers to 70:30 mass ratio of 1,3-dioxolane and LiBETI; and Li(G4)]TFSI refers to tetraglyme and lithium bis(trifluoromethane)sulfonimide in a 1:1 molar ratio.

Olivine cathodes such as lithium iron phosphate or lithium manganese phosphate or their solid solutions, or doped and nanoscale olivines, can be used with Li₄Ti₅O₁₂ (LTO) in DMC based electrolytes. Such systems will have an operating voltage of 1.9 V to 2.5V. Power and cycle life is expected to be excellent for nanoscale active materials in these systems.

LiMn₂O₄ - graphite used with DXL has a higher cell voltage of 2.8 V.

Li₂MnO₃•LiMO₂ - LTO used with DMC has a cell voltage of 2.9 V. This high capacity cathode when used with the higher voltage LTO anode still has a high cell voltage and is expected to have high anode stability.

Li₂MnO₃•LiMO₂ when used with a high capacity anode such as that produced by 3M, or Si, or even graphite, and used with [Li(G4)]TFSI electrolyte will have a high energy density due to the high capacity of both cathode and anode, and the higher cell voltage: of 3.9 - 4.3 V. Note that the cycle life of high capacity anodes such as Si and the 3M alloy, which undergo large volume changes as they are charged and discharged, is likely to be improved in the semi-solid electrodes described herein since the active material particles are free to expand and contract within the liquid phase without generating large stresses as they do in a conventional electrode.

**Table 12. Comparison of voltage (vs. Li/Li+) of several Li-ion cathode and anode materials and the stability ranges of electrolytes, showing systems suitable for electrochemical cells comprising electrochemically active fluids such as semi-solid suspensions.**

| Material | Operating Voltage (V) | Capacity (mAh/g) | Potential vs. Li (V) | SSDE | DMC | DXL | DOL | [Li(G4)]TFSI |
|---|---|---|---|---|---|---|---|---|
| | | | 5 | | | | | |
| Li₂MnO₂ LiMO₂^{∗} | 4.5 | 250 | 4.5 | | | | | |
| LiCoO₂ | 3.9 | 140 | 4 | | | | | |
| LiFePO₄ | 3.4 | 170 | 3.5 | | | | | |
| LiMn₂O₄ | 2.8 - 3.2 | 140 | 3 | | | | | |
| | | | 2.5 | | | | | |
| | | | 2 | | | | | |
| LTO | 1.55 | 170 | 1.5 | | | | | |
| Si | 0.5 - 1 | 4200 | 1 | | | | | |
| 3M anode | 0.4 - 0.5 | 450 | 0.5 | | | | | |
| Graphite | 0.1 - 0.2 | 340 | 0 | | | | | |

| | | | | | | | | |
|---|---|---|---|---|---|---|---|---|
| ^{∗} - M = Co, Ni, Mn. | | | | | | | | |

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the claims, as well as in the specification above, all transitional phrases such as "comprising," "including," "carrying," "having," "containing," "involving," "holding," and the like are to be understood to be open-ended, i.e., to mean including but not limited to. Only the transitional phrases "consisting of" and "consisting essentially of' shall be closed or semi-closed transitional phrases.

## Claims

1. An electrochemical cell (100), comprising:
a first electrode compartment (112) configured to contain a first electrochemically active fluid (110), the first electrochemically active fluid comprising at least one of a semi-solid and a redox active ion-storing liquid, the first electrode compartment defined at least in part by a wall (117, 118) and an ion-exchange medium (114);
a second electrode compartment (122) configured to contain a second electrochemically active fluid (120), the second electrochemically active fluid comprising at least one of a semi-solid and a redox active ion-storing liquid, the second electrode compartment defined at least in part by a wall (117, 118) and the ion-exchange medium (114), wherein:
at least a portion of the walls includes a deformable polymer,
the electrochemical cell is configured such that, during operation, none of the first and/or the second electrochemically active fluid is transported out of the first or second electrode compartment, and
semi-solid means that the material is a mixture of liquid and solid phases.

2. The electrochemical cell of claim 1, wherein at least one of the first and second electrochemically active fluid (110, 120) comprises a conductive additive.

3. The electrochemical cell of claim 2, wherein the conductive additive comprises electronically conductive nanoscale particles.

4. The electrochemical cell of any one of claims 1-3, wherein the electrochemical cell is configured such that, during operation, none of the first and second electrochemically active fluids (110, 120) are transported out of the first and second electrode compartments (112, 122).

5. The electrochemical cell of any one of claims 1-4, wherein the first and/or second electrochemically active fluid (110, 120) comprises a semi-solid.

6. The electrochemical cell of any one of claims 1-5, wherein at least one of the first and second electrochemically active fluid (110, 120) is a non-Newtonian fluid.

7. The electrochemical cell of any one of claims 1-6, wherein the first and/or second electrochemically active fluid (110, 120) contains Li⁺, Na⁺, Mg²⁺, Al³⁺, Ca²⁺, H⁺, and/or OH⁻.

8. The electrochemical cell of claim 7, wherein
the first and/or second electrochemically active fluid (110, 120) contains Li⁺, and
the first and/or second electrochemically active fluid (110, 120) comprises:
an ion storage compound comprising a metal fluoride, and preferably CuF₂, FeF₂, FeF₃, BiF₃, CoF₂, and/or NiF₂, or
an ion storage compound comprising CoO, Co₃O₄, NiO, CuO, and/or MnO, or
an intercalation compound selected from compounds with formula Li_{1-x-z}M_{1-z}PO₄, wherein M comprises at least one first row transition metal selected from the group consisting of Ti, V, Cr, Mn, Fe, Co and Ni, wherein x is from 0 to 1 and z can be positive or negative, or
an intercalation compound selected from compounds with formula (Li₁₋ₓZₓ)MPO₄, wherein M is one or more of V, Cr, Mn, Fe, Co, and Ni, and Z is a non-alkali metal dopant such as one or more of Ti, Zr, Nb, Al, or Mg, and x ranges from 0.005 to 0.05, or
an intercalation compound selected from compounds with formula LiMPO₄, wherein M is one or more of V, Cr, Mn, Fe, Co, and Ni, in which the compound is optionally doped at the Li, M or O-sites, or
an intercalation compound selected from the group consisting of Aₓ(M'1₋ₐM"ₐ)_{y}(XD₄)_{z}, Aₓ(M'₁₋ₐM"ₐ)_{y}(DXD₄)_{z}, and Aₓ(M'₁₋ₐM"ₐ)_{y}(X₂D₇)_{z}, wherein:
x, plus y(1-a) times a formal valence or valences of M', plus ya times a formal valence or valence of M", is equal to z times a formal valence of the XD₄, X₂D₇, or DXD₄ group; and
A is at least one of an alkali metal and hydrogen, M' is a first-row transition metal, X is at least one of phosphorus, sulfur, arsenic, molybdenum, and tungsten, M" any of a Group IIA, IIIA, IVA, VA, VIA, VIIA, VIIIA, IB, IIB, IIIB, IVB, VB, and VIB metal, D is at least one of oxygen, nitrogen, carbon, or a halogen, or
an intercalation compound selected from the group consisting of (A₁₋ₐM"ₐ)ₓM'_{y}(XD₄)_{z}, (A₁₋ₐM"ₐ)ₓM'_{y}(DXD₄)_{z} and A₁₋ₐM"ₐ)ₓM'_{y}(X₂D₇)_{z}, wherein
(1-a)x plus the quantity ax times the formal valence or valences of M" plus y times the formal valence or valences of M' is equal to z times the formal valence of the XD₄, X₂D₇ or DXD₄ group, and
A is at least one of an alkali metal and hydrogen, M' is a first-row transition metal, X is at least one of phosphorus, sulfur, arsenic, molybdenum, and tungsten, M" any of a Group IIA, IIIA, IVA, VA, VIA, VIIA, VIIIA, IB, IIB, IIIB, IVB, VB, and VIB metal, D is at least
one of oxygen, nitrogen, carbon, or a halogen, or
an intercalation compound selected from the group consisting of ordered rocksalt compounds Li*M*O₂,
wherein M comprises at least one first-row transition metal but may include non-transition metals including but not limited to Al, Ca, Mg, or Zr.

9. The electrochemical cell of any one of claims 1-6, wherein the first and/or second electrochemically active fluid (110, 120) comprises:
a solid comprising amorphous carbon, disordered carbon, graphitic carbon, or a metal-coated or metal-decorated carbon, or
a solid comprising a metal or metal alloy or metalloid or metalloid alloy or silicon, or a solid comprising nanostructures including nanowires, nanorods, and/or nanotetrapods, or
a solid comprising an organic redox compound, or
a solid selected from the group consisting of ordered rocksalt compounds Li*M*O₂ including those having the α-NaFeO₂ and orthorhombic-LiMnO₂ structure type or their derivatives of different crystal symmetry, atomic ordering, or partial substitution for the metals or oxygen, wherein M comprises at least one first-row transition metal but may include non-transition metals including but not limited to Al, Ca, Mg, or Zr and the negative electrode comprises a flowable semi-solid ion-storing redox composition comprising a solid selected from the group consisting of amorphous carbon, disordered carbon, graphitic carbon, or a metal-coated or metal-decorated carbon.

10. The electrochemical cell of any one of claims 1-6, wherein the electrochemical cell comprises a positive electrode active material comprising:
a solid selected from the group consisting of Aₓ(M'₁₋ₐM"ₐ)_{y}(XD₄)_{z}, Aₓ(M'₁₋ₐM"ₐ)_{y}(DXD₄)_{z}, and Aₓ(M'₁₋ₐM"ₐ)_{y}(X₂D₇)_{z}, and wherein x, plus y(1-a) times a formal valence or valences of M', plus ya times a formal valence or valences of M", is equal to z times a formal valence of the XD₄, X₂D₇, or DXD₄ group, and
A is at least one of an alkali metal and hydrogen, M' is a first-row transition metal, X is at least one of phosphorus, sulfur, arsenic, molybdenum, and tungsten, M" is any of a Group IIA, IIIA, IVA, VA, VIA, VIIA, VIIIA, IB, IIB, IIIB, IVB, VB, and VIB metal, D is at least one of oxygen, nitrogen, carbon, or a halogen or
A positive electrode active material comprising a compound with a spinel structure or,
A positive electrode active material comprising a compound selected from the group consisting of LiMn₂O₄ and its derivatives; layered-spinel nanocomposites in which the structure includes nanoscopic regions having ordered rocksalt and spinel ordering; olivines LiMPO₄ and their derivatives, in which M comprises one or more of Mn, Fe, Co, or Ni, partially fluorinated compounds such as LiVPO₄F, other "polyanion" compounds, and vanadium oxides VₓO_{y}; and
a negative electrode comprising a flowable semi-solid ion-storing redox composition comprising a solid selected from the group consisting of amorphous carbon, disordered carbon, graphitic carbon, or a metal-coated or metal-decorated carbon.

11. The electrochemical cell of any one of claims 1-6, wherein the electrochemical cell comprises a negative electrode active material comprising:
graphite, graphitic boron-carbon alloys, hard or disordered carbon, lithium titanate spinel, or a solid metal or metal alloy or metalloid or metalloid alloy that reacts with lithium to form intermetallic compounds, including the metals Sn, Bi, Zn, Ag, and/or Al, and the metalloids Si and Ge, or lithium titanate spinel.

12. The electrochemical cell of any one of claims 1-11, wherein the ion-exchange medium (114) comprises an ion-permeable membrane.

13. The electrochemical cell of any one of claims 1-12, wherein the electronic conductivity of the first and/or second electrochemically active fluid (110, 120) is at least 10⁻⁵ S/cm, or at least 10⁻⁴ S/cm, or at least 10⁻³ S/cm,
wherein electronic conductivity is measured in a parallel plate setup using a measuring device constructed using 3 mm × 10 mm stainless steel plates with 1.6 mm spacing in between the plates, which is connected to the FRA Analyzer of a 1400 Cell Test System, wherein conductivity is determined by varying the frequency of an AC current from 0.1 to 10⁶ Hz and analysing the resulting Nyquist plot of imaginary vs. real parts of the resistance.

14. The electrochemical cell of any one of claims 1-13, wherein the first and/or the second electrochemically active fluids (110, 120) comprises a semi-solid having a volume percentage of ion- storing solid phases of between 5% and 70%, or at least 70%, or at least 75% or at least 85%.

15. The electrochemical cell of any one of claims 1-14, wherein the first and second electrochemically active fluids (110, 120) have a steady-state shear viscosity of less than 1.5 kPa.s (1.5×10⁶ cP), wherein the viscosity is measured inside a glove box using a Brookfield Digital Viscometer, mode DV-II+ Pro Extra and the experimental setup consists of varying the shear rate between 5 and 35 sec⁻¹ in increments of 5 sec⁻¹, wherein for each shear rate, 30 data points for viscosity are taken over the course of a minute, and the resulting data is plotted correlating viscosity to the shear rate.

16. The electrochemical cell of claim 1, wherein the walls (117, 118) include a containment material that is not electrically conductive.

17. The electrochemical cell of claim 1, wherein the first electrode comprises a first semi-solid comprising a cathode active material comprising a lithium transition metal phosphoolivine or the second electrode comprises a second semi-solid comprising an anode active material comprising a graphite.

18. The electrochemical cell of claim 1, wherein at least one of the first and/or second electrode compartments (112, 122) is configured such that an electrochemically active fluid can be flowed into the compartment.

19. The electrochemical cell of any one of claims 1-18, wherein the semi-solid comprises a solid electrode active material suspended in an electrolyte and the electrolyte is selected such that the electrode active material does not dissolve within the electrolyte during operation of the electrochemical cell.

20. The electrochemical cell of any one of the preceding claims, wherein the electrochemical cell comprises a battery, and preferably the battery comprises a rechargeable battery.

## Patentansprüche

1. Elektrochemische Zelle (100), umfassend:
eine erste Elektrodenkammer (112), die so konfiguriert ist, dass sie eine erste elektrochemisch aktive Flüssigkeit (110) enthält, wobei die erste elektrochemisch aktive Flüssigkeit mindestens eines aus einem Halbfeststoff und einer Redox-aktiven Ionen-speichernden Flüssigkeit umfasst, wobei die erste Elektrodenkammer mindestens teilweise durch eine Wand (117, 118) und ein Ionenaustauschmedium (114) definiert ist;
eine zweite Elektrodenkammer (122), die so konfiguriert ist, dass sie eine zweite elektrochemisch aktive Flüssigkeit (120) enthält, wobei die zweite elektrochemisch aktive Flüssigkeit mindestens eines aus einem Halbfeststoff und einer Redox-aktiven Ionen-speichernden Flüssigkeit umfasst, wobei die zweite Elektrodenkammer mindestens teilweise durch eine Wand (117, 118) und das Ionenaustauschmedium (114) definiert ist, wobei:
mindestens ein Teil der Wände ein deformierbares Polymer einschließt,
die elektrochemische Zelle so konfiguriert ist, dass während des Betriebs keine der ersten und/oder der zweiten elektrochemisch aktiven Flüssigkeit aus der ersten oder zweiten Elektrodenkammer heraustransportiert wird, und
Halbfeststoff bedeutet, dass das Material eine Mischung aus flüssigen und festen Phasen ist.

2. Elektrochemische Zelle nach Anspruch 1, wobei mindestens eine aus der ersten und zweiten elektrochemisch aktiven Flüssigkeit (110, 120) ein leitfähiges Additiv umfasst.

3. Elektrochemische Zelle nach Anspruch 2, wobei das leitfähige Additiv elektrisch leitfähige Teilchen im Nanobereich umfasst.

4. Elektrochemische Zelle nach mindestens einem der Ansprüche 1-3, wobei die elektrochemische Zelle so konfiguriert ist, dass während des Betriebs keine der ersten und zweiten elektrochemisch aktiven Flüssigkeiten (110, 120) aus der ersten und zweiten Elektrodenkammer (112, 122) heraustransportiert wird.

5. Elektrochemische Zelle nach mindestens einem der Ansprüche 1-4, wobei die erste und/oder zweite elektrochemisch aktive Flüssigkeit (110, 120) einen Halbfeststoff umfasst.

6. Elektrochemische Zelle nach mindestens einem der Ansprüche 1-5, wobei mindestens eine aus der ersten und zweiten elektrochemisch aktiven Flüssigkeit (110, 120) eine nicht-Newtonsche Flüssigkeit ist.

7. Elektrochemische Zelle nach mindestens einem der Ansprüche 1-6, wobei die erste und/oder zweite elektrochemisch aktive Flüssigkeit (110, 120) Li⁺, Na⁺, Mg²⁺, Al³⁺, Ca²⁺, H⁺ und/oder OH⁻ enthält.

8. Elektrochemische Zelle nach Anspruch 7, wobei
die erste und/oder zweite elektrochemisch aktive Flüssigkeit (110, 120) Li⁺ enthält, und
die erste und/oder zweite elektrochemisch aktive Flüssigkeit (110, 120) folgendes umfasst:
eine Ionenspeicherverbindung, die ein Metallfluorid umfasst, vorzugsweise CuF₂, FeF₂, FeF₃, BiF₃, CoF₂ und/oder NiF₂, oder
eine Ionenspeicherverbindung, die CoO, Co₃O₄, NiO, CuO und/oder MnO umfasst, oder
eine Interkalationsverbindung, ausgewählt aus Verbindungen mit der Formel Li_{1-x-z}M_{1-z}PO₄, worin M mindestens ein Übergangsmetall der ersten Reihe umfasst, ausgewählt aus der Gruppe bestehend aus Ti, V, Cr, Mn, Fe, Co und Ni, worin x 0 bis 1 ist und z positiv oder negativ sein kann, oder
eine Interkalationsverbindung, ausgewählt aus Verbindungen mit der Formel (Li₁₋ₓZₓ)MPO₄, worin M eines oder mehrere aus V, Cr, Mn, Fe, Co und Ni ist, und Z ein Nicht-Alkalimetall-Dotierstoff ist, wie beispielsweise eines oder mehrere aus Ti, Zr, Nb, Al oder Mg, und x im Bereich von 0,005 bis 0,05 liegt, oder
eine Interkalationsverbindung, ausgewählt aus Verbindungen mit der Formel LiMPO₄, worin M eines oder mehrere aus V, Cr, Mn, Fe, Co und Ni ist, wobei die Verbindung optional an den Li-, M- oder O-Stellen dotiert ist, oder
eine Interkalationsverbindung, ausgewählt aus der Gruppe bestehend aus Aₓ(M'₁₋ₐM"ₐ)_{y}(XD₄)_{z}, Aₓ(M'₁₋ₐM"ₐ)_{y}(DXD₄)_{z} und Aₓ(M'₁₋ₐM"ₐ)_{y}(X₂D₇)_{z}, wobei:
x, plus y(1-a) mal eine formale Valenz oder Valenzen von M', plus ya mal eine formale Valenz oder Valenzen von M", gleich z mal eine formale Valenz der XD₄-, X₂D₇- oder DXD₄-Gruppe ist; und
A mindestens eines aus einem Alkalimetall und Wasserstoff ist, M' ein Übergangsmetall der ersten Reihe ist, X mindestens eines aus Phosphor, Schwefel, Arsen, Molybdän und Wolfram ist, M" eines aus einem Gruppe IIA, IIIA, IVA, VA, VIA, VIIA, VIIIA, IB, IIB, IIIB, IVB, VB und VIB Metall ist, D mindestens eines aus Sauerstoff, Stickstoff, Kohlenstoff oder einem Halogen ist, oder
eine Interkalationsverbindung, ausgewählt aus der Gruppe bestehend aus (A₁₋ₐM"ₐ)ₓM'_{y}(XD₄)_{z}, (A₁₋ₐM"ₐ)ₓM'_{y}(DXD₄)_{z} und A₁₋ₐM"ₐ)ₓM_{y}(X₂D₇)_{z}, wobei
(1-a)x plus die Menge ax mal die formale Valenz oder Valenzen von M" plus y mal die formale Valenz oder Valenzen von M' gleich z mal die formale Valenz der XD₄-, X₂D₇- oder DXD₄-Gruppe ist, und
A mindestens eines aus einem Alkalimetall und Wasserstoff ist, M' ein Übergangsmetall der ersten Reihe ist, X mindestens eines aus Phosphor, Schwefel, Arsen, Molybdän und Wolfram ist, M" eines aus einem Gruppe IIA, IIIA, IVA, VA, VIA, VIIA, VIIIA, IB, IIB, IIIB, IVB, VB und VIB Metall ist, D mindestens eines aus Sauerstoff, Stickstoff, Kohlenstoff oder einem Halogen ist, oder
eine Interkalationsverbindung, ausgewählt aus der Gruppe bestehend aus geordneten Steinsalzverbindungen LiMO₂,
worin M mindestens ein Übergangsmetall der ersten Reihe umfasst, aber auch Nicht-Übergangsmetalle einschließen kann, einschließlich, aber nicht beschränkt auf Al, Ca, Mg oder Zr.

9. Elektrochemische Zelle nach mindestens einem der Ansprüche 1-6, wobei die erste und/oder zweite elektrochemisch aktive Flüssigkeit (110, 120) folgendes umfasst:
einen Feststoff, der amorphen Kohlenstoff, ungeordneten Kohlenstoff, graphitischen Kohlenstoff oder einen metallbeschichteten oder metalldekorierten Kohlenstoff umfasst, oder
einen Feststoff, der ein Metall oder eine Metallegierung oder ein Metalloid oder eine Metalloidlegierung oder Silizium umfasst, oder einen Feststoff, der Nanostrukturen einschließlich Nanodrähten, Nanostäbchen und/oder Nanotetrapoden umfasst, oder
ein Feststoff, der eine organische Redoxverbindung umfasst, oder
einen Feststoff, ausgewählt aus der Gruppe bestehend aus geordneten Steinsalzverbindungen LiMO₂ einschließlich solcher mit dem α-NaFeO₂- und orthorhombischen LiMnO₂-Strukturtyp oder deren Derivaten mit unterschiedlicher Kristallsymmetrie, atomarer Ordnung oder teilweiser Substitution der Metalle oder des Sauerstoffs, wobei M mindestens ein Übergangsmetall der ersten Reihe umfasst, aber auch Nicht-Übergangsmetalle, einschließlich, aber nicht beschränkt auf Al, Ca, Mg oder Zr umfassen kann, und die negative Elektrode eine fließfähige halbfeste ionenspeichernde Redoxzusammensetzung umfasst, die einen Feststoff umfasst, ausgewählt aus der Gruppe bestehend aus amorphem Kohlenstoff, ungeordnetem Kohlenstoff, graphitischem Kohlenstoff oder einem metallbeschichteten oder metalldekorierten Kohlenstoff.

10. Elektrochemische Zelle nach mindestens einem der Ansprüche 1-6, wobei die elektrochemische Zelle ein Positivelektrodenaktivmaterial umfasst, umfassend:
einen Feststoff, ausgewählt aus der Gruppe bestehend aus Aₓ(M'₁₋ₐM"ₐ)_{y}(XD₄)_{z}, Aₓ(M'₁₋ₐM"ₐ)_{y}(DXD₄)_{z} und Aₓ(M'₁₋ₐM"ₐ)_{y}(X₂D₇)_{z}, und worin x, plus y(1-a) mal eine formale Valenz oder Valenzen von M', plus ya mal eine formale Valenz oder Valenzen von M", gleich z mal eine formale Valenz der XD₄-, X₂D₇- oder DXD₄-Gruppe ist, und
A mindestens eines aus einem Alkalimetall und Wasserstoff ist, M' ein Übergangsmetall der ersten Reihe ist, X mindestens eines aus Phosphor, Schwefel, Arsen, Molybdän und Wolfram ist, M" eines aus einem Gruppe IIA, IIIA, IVA, VA, VIA, VIIA, VIIIA, IB, IIB, IIIB, IVB, VB und VIB Metall ist, D mindestens eines aus Sauerstoff, Stickstoff, Kohlenstoff oder einem Halogen ist, oder
ein Positivelektrodenaktivmaterial, das eine Verbindung mit einer Spinellstruktur umfasst, oder,
ein Positivelektrodenaktivmaterial, umfassend eine Verbindung, ausgewählt aus der Gruppe bestehend aus LiMn₂O₄ und seinen Derivaten; Schicht-Spinell-Nanoverbundstoffen, in denen die Struktur nanoskopische Bereiche mit geordneter Steinsalz- und Spinellordnung einschließt; Olivinen LiMPO₄ und ihren Derivaten, in denen M eines oder mehrere aus Mn, Fe, Co oder Ni umfasst, teilweise fluorierten Verbindungen wie LiVPO₄F, anderen "Polyanion"-Verbindungen und Vanadiumoxiden VₓO_{y}; und
eine negative Elektrode, die eine fließfähige halbfeste ionenspeichernde Redoxzusammensetzung umfasst, die einen Feststoff umfasst, ausgewählt aus der Gruppe bestehend aus amorphem Kohlenstoff, ungeordnetem Kohlenstoff, graphitischem Kohlenstoff oder einem metallbeschichteten oder metalldekorierten Kohlenstoff.

11. Elektrochemische Zelle nach mindestens einem der Ansprüche 1-6, wobei die elektrochemische Zelle ein Negativelektrodenaktivmaterial umfasst, umfassend:
Graphit, graphitische Bor-Kohlenstoff-Legierungen, harter oder ungeordneter Kohlenstoff, Lithiumtitanatspinell oder ein festes Metall oder eine feste Metalllegierung oder ein Metalloid oder eine Metalloidlegierung, die mit Lithium unter Bildung intermetallischer Verbindungen reagiert, einschließlich der Metalle Sn, Bi, Zn, Ag und/oder Al und der Metalloide Si und Ge oder Lithiumtitanatspinell.

12. Elektrochemische Zelle nach mindestens einem der Ansprüche 1-11, wobei dass Ionenaustauschmedium (114) eine Ionen-durchlässige Membran umfasst.

13. Elektrochemische Zelle nach mindestens einem der Ansprüche 1-12, wobei die elektrische Leitfähigkeit der ersten und/oder zweiten elektrochemisch aktiven Flüssigkeit (110, 120) mindestens 10⁻⁵ S/cm, oder mindestens 10⁻⁴ S/cm, oder mindestens 10⁻³ S/cm beträgt,
wobei die elektrische Leitfähigkeit in einem Parallelplattenaufbau unter Verwendung einer Messvorrichtung gemessen wird, die unter Verwendung von 3 mm × 10 mm großen Edelstahlplatten mit einem Abstand von 1,6 mm zwischen den Platten konstruiert ist, und welche mit dem FRA-Analysator eines 1400-Zellen-Testsystems verbunden ist, wobei die Leitfähigkeit durch Variieren der Frequenz eines Wechselstroms von 0,1 bis 10⁶ Hz und Analysieren des sich ergebenden Nyquist-Diagramms von Imaginär- gegenüber Realteilen des Widerstands bestimmt wird.

14. Elektrochemische Zelle nach mindestens einem der Ansprüche 1-13, wobei die erste und/oder die zweite elektrochemisch aktive Flüssigkeit (110, 120) einen Halbfeststoff mit einem Volumenprozentsatz an ionenspeichernden Feststoffphasen zwischen 5% und 70%, oder mindestens 70%, oder mindestens 75% oder mindestens 85% umfasst.

15. Elektrochemische Zelle nach mindestens einem der Ansprüche 1-14, wobei die erste und zweite elektrochemisch aktive Flüssigkeit (110, 120) eine stationäre Scherviskosität von weniger als 1,5 kPa.s (1,5×10⁶ cP) aufweisen, wobei die Viskosität in einer Glovebox unter Verwendung eines digitalen Brookfield-Viskosimeters, Modus DV-II+ Pro Extra, gemessen wird und der Versuchsaufbau darin besteht, die Schergeschwindigkeit zwischen 5 und 35 sec⁻¹ in Schritten von 5 sec⁻¹ zu variieren, wobei für jede Schergeschwindigkeit 30 Datenpunkte für die Viskosität im Verlauf einer Minute genommen werden und die resultierenden Daten so aufgezeichnet werden, dass die Viskosität mit der Schergeschwindigkeit korreliert wird.

16. Elektrochemische Zelle nach Anspruch 1, wobei die Wände (117, 118) ein Umschließungsmaterial enthalten, das nicht elektrisch leitend ist.

17. Elektrochemische Zelle nach Anspruch 1, wobei die erste Elektrode einen ersten Halbfeststoff umfasst, der ein Kathodenaktivmaterial umfasst, das ein Lithium-Übergangsmetall-Phosphor-Olivin umfasst, oder die zweite Elektrode einen zweiten Halbfeststoff umfasst, der ein Anodenaktivmaterial umfasst, das ein Graphit umfasst.

18. Elektrochemische Zelle nach Anspruch 1, wobei mindestens eine der ersten und/oder zweiten Elektrodenkammern (112, 122) so konfiguriert ist, dass eine elektrochemisch aktive Flüssigkeit in die Kammer fließen kann.

19. Elektrochemische Zelle nach mindestens einem der Ansprüche 1-18, wobei der Halbfeststoff ein festes Elektrodenaktivmaterial umfasst, das in einem Elektrolyten suspendiert ist, und der Elektrolyt so ausgewählt ist, dass sich das Elektrodenaktivmaterial während des Betriebs der elektrochemischen Zelle nicht in dem Elektrolyten auflöst.

20. Elektrochemische Zelle nach mindestens einem der vorhergehenden Ansprüche, wobei die elektrochemische Zelle eine Batterie umfasst, und die Batterie vorzugsweise eine wiederaufladbare Batterie umfasst.

## Revendications

1. Cellule électrochimique (100), comprenant :
un premier compartiment d'électrode (112) configuré pour contenir un premier fluide électrochimiquement actif (110), le premier fluide électrochimiquement actif comprenant au moins l'un parmi un semi-solide et un liquide de stockage d'ions redox actif, le premier compartiment d'électrode étant défini au moins en partie par une paroi (117, 118) et un milieu d'échange d'ions (114) ;
un second compartiment d'électrode (122) configuré pour contenir un second fluide électrochimiquement actif (120), le second fluide électrochimiquement actif comprenant au moins l'un d'un semi-solide et d'un liquide de stockage d'ions redox actif, le second compartiment d'électrode défini au moins en partie par une paroi (117, 118) et le milieu d'échange d'ions (114), dans laquelle :
au moins une partie des parois inclut un polymère déformable,
la cellule électrochimique est configurée de sorte que, pendant le fonctionnement, aucun du premier et/ou du deuxième fluide électrochimiquement actif n'est transporté hors du premier ou du second compartiment d'électrode, et
semi-solide signifie que le matériau est un mélange de phases liquides et solides.

2. Cellule électrochimique selon la revendication 1, dans laquelle au moins un des premier et second fluides électrochimiquement actifs (110, 120) comprend un additif conducteur.

3. Cellule électrochimique selon la revendication 2, dans laquelle l'additif conducteur comprend des particules à l'échelle nanométrique électroniquement conductrices.

4. Cellule électrochimique selon l'une quelconque des revendications 1-3, dans laquelle la cellule électrochimique est configurée de sorte que, pendant le fonctionnement, aucun des premier et second fluides électrochimiquement actifs (110, 120) n'est transporté hors des premier et second compartiments d'électrode (112, 122).

5. Cellule électrochimique selon l'une quelconque des revendications 1-4, dans laquelle le premier et/ou le second fluide électrochimiquement actif (110, 120) comprend un semi-solide.

6. Cellule électrochimique selon l'une quelconque des revendications 1-5, dans laquelle au moins l'un des premier et second fluides électrochimiquement actifs (110, 120) est un fluide non newtonien.

7. Cellule électrochimique selon l'une quelconque des revendications 1-6, dans laquelle le premier et/ou le second fluide électrochimiquement actif (110, 120) contient Li+, Na⁺, Mg²⁺, Al³⁺, Ca²⁺, H⁺, et/ou OH⁻.

8. Cellule électrochimique selon la revendication 7, dans laquelle
le premier et/ou le second fluide électrochimiquement actif (110, 120) contient Li⁺, et
le premier et/ou le second fluide électrochimiquement actif (110, 120) comprend :
un composé de stockage d'ions comprenant un fluorure métallique, et de préférence CuF₂, FeF₂, FeF₃, BiF₃, CoF₂, et/ou NiF₂, ou
un composé de stockage d'ions comprenant CoO, Co₃O₄, NiO, CuO, et/ou MnO, ou
un composé d'intercalation choisi parmi les composés de formule Li_{1-x-z}M_{1-z}PO₄, dans laquelle M comprend au moins un métal de transition de première rangée choisi dans le groupe consistant en Ti, V, Cr, Mn, Fe, Co et Ni, dans laquelle x est de 0 à 1 et z peut être positif ou négatif, ou
un composé d'intercalation choisi parmi les composés de formule (Li₁₋ₓZₓ)MPO₄, dans laquelle M est un ou plusieurs parmi V, Cr, Mn, Fe, Co et Ni, et Z est un dopant métallique non alcalin tel qu'un ou plusieurs parmi Ti, Zr, Nb, Al ou Mg, et x est dans la plage allant de 0,005 à 0,05, ou
un composé d'intercalation choisi parmi les composés de formule LiMPO₄, dans laquelle M est un ou plusieurs parmi V, Cr, Mn, Fe, Co et Ni, dans laquelle le composé est facultativement dopé au niveau des sites Li, M ou O, ou
un composé d'intercalation choisi dans le groupe consistant en Aₓ(M'₁₋ₐM"ₐ)_{y}(XD₄)_{z}, Aₓ(M'₁₋ₐM"ₐ)_{y}(DXD₄)_{z}, et Aₓ(M'₁₋ₐM"ₐ)_{y}(X₂D₇)_{z}, dans laquelle :
x, plus y(1-a) fois une valence ou des valences formelles de M', plus ya fois une valence ou des valences formelles de M", est égal à z fois une valence formelle du groupe XD₄, X₂D₇, ou DXD₄ ; et
A est au moins l'un parmi un métal alcalin et l'hydrogène, M' est un métal de transition de première rangée, X est au moins l'un parmi le phosphore, le soufre, l'arsenic, le molybdène et le tungstène, M" est l'un quelconque des métaux des groupes IIA, IIIA, IVA, VA, VIA, VIIA, VIIIA, IB, IIB, IIIB, IVB, VB et VIB, D est au moins l'un parmi l'oxygène, l'azote, le carbone ou un halogène, ou
un composé d'intercalation choisi dans le groupe consistant en (A₁₋ₐM"ₐ)ₓM'_{y}(XD₄)_{z}, (A₁₋ₐM"ₐ)ₓM'_{y}(DXD₄)_{z} et A₁₋ₐ,M"ₐ)ₓM'_{y}(X₂D₇)_{z}, dans laquelle
(1-a)x plus la quantité ax fois la ou les valences formelles de M" plus y fois la ou les valences formelles de M' est égal à z fois la valence formelle du groupe XD₄, X₂D₇ ou DXD₄, et
A est au moins l'un parmi un métal alcalin et l'hydrogène, M' est un métal de transition de première rangée, X est au moins l'un parmi le phosphore, le soufre, l'arsenic, le molybdène et le tungstène, M" est l'un quelconque des métaux des groupes IIA, IIIA, IVA, VA, VIA, VIIA, VIIIA, IB, IIB, IIIB, IVB, VB et VIB, D est au moins
l'un parmi l'oxygène, l'azote, le carbone ou un halogène, ou
un composé d'intercalation choisi dans le groupe consistant en des composés de sel de roche ordonnés Li*M*O₂,
dans laquelle M comprend au moins un métal de transition de première rangée mais peut inclure des métaux de non-transition, y compris, de manière non exhaustive, Al, Ca, Mg ou Zr.

9. Cellule électrochimique selon l'une quelconque des revendications 1-6, dans laquelle le premier et/ou le second fluide électrochimiquement actif (110, 120) comprend :
un solide comprenant du carbone amorphe, du carbone désordonné, du carbone graphitique, ou un carbone revêtu de métal ou décoré de métal, ou
un solide comprenant un métal ou un alliage de métaux ou un métalloïde ou un alliage de métalloïdes ou du silicium, ou un solide comprenant des nanostructures incluant des nanofils, des nanorods et/ou des nanotétrapodes, ou
un solide comprenant un composé redox organique, ou
un solide choisi dans le groupe consistant en composés de sel de roche ordonnés LiMO₂ incluant ceux présentant le type de structure α-NaFeO₂ et orthorhombique-LiMnO₂ ou leurs dérivés de symétrie cristalline différente, d'ordonnancement atomique, ou de substitution partielle pour les métaux ou l'oxygène, dans laquelle M comprend au moins un métal de transition de la première rangée mais peut inclure des métaux de non-transition, y compris, de manière non exhaustive, Al, Ca, Mg ou Zr, et l'électrode négative comprend une composition redox coulante semi-solide de stockage d'ions comprenant un solide choisi dans le groupe consistant en du carbone amorphe, du carbone désordonné, du carbone graphitique ou un carbone revêtu de métal ou décoré de métal.

10. Cellule électrochimique selon l'une quelconque des revendications 1-6, dans laquelle la cellule électrochimique comprend un matériau actif d'électrode positive comprenant :
un solide choisi dans le groupe consistant en Aₓ(M'₁₋ₐM"ₐ)_{y}(XD₄)_{z}, Aₓ(M'₁₋ₐM"ₐ)_{y}(DXD₄)_{z}, et Aₓ(M'₁₋ₐM"ₐ)_{y}(X₂D₇)_{z}, et dans laquelle x, plus y(1-a) fois une valence ou des valences formelles de M', plus ya fois une valence ou des valences formelles de M", est égal à z fois une valence formelle du groupe XD₄, X₂D₇, ou DXD₄, et
A est au moins l'un parmi un métal alcalin et l'hydrogène, M' est un métal de transition de première rangée, X est au moins l'un parmi le phosphore, le soufre, l'arsenic, le molybdène et le tungstène, M" est l'un quelconque des métaux des groupes IIA, IIIA, IVA, VA, VIA, VIIA, VIIIA, IB, IIB, IIIB, IVB, VB et VIB, D est au moins l'un parmi l'oxygène, l'azote, le carbone ou un halogène ou
un matériau actif d'électrode positive comprenant un composé avec une structure spinelle ou,
un matériau actif d'électrode positive comprenant un composé choisi dans le groupe consistant en LiMn₂O₄ et ses dérivés ; des nanocomposites couche-spinelle dans lesquels la structure inclut des régions nanoscopiques présentant un ordonnancement de sel de roche et de spinelle; des olivines LiMPO₄ et leurs dérivés, dans lesquelles M comprend un ou plusieurs éléments parmi Mn, Fe, Co ou Ni, des composés partiellement fluorés tels que LiVPO₄F, d'autres composés "polyanioniques" et des oxydes de vanadium VₓO_{y}; et
une électrode négative comprenant une composition redox de stockage d'ions semi-solide fluide comprenant un solide choisi dans le groupe consistant en du carbone amorphe, du carbone désordonné, du carbone graphitique, ou un carbone revêtu de métal ou décoré de métal.

11. Cellule électrochimique selon l'une quelconque des revendications 1-6, dans laquelle la cellule électrochimique comprend un matériau actif d'électrode négative comprenant :
du graphite, des alliages bore-carbone graphitiques, du carbone dur ou désordonné, du spinelle de titanate de lithium, ou un métal solide ou un alliage métallique ou un métalloïde ou un alliage métalloïde qui réagit avec le lithium pour former des composés intermétalliques, incluant les métaux Sn, Bi, Zn, Ag et/ou Al, et les métalloïdes Si et Ge, ou le spinelle de titanate de lithium.

12. Cellule électrochimique selon l'une quelconque des revendications 1-11, dans laquelle le milieu échangeur d'ions (114) comprend une membrane perméable aux ions.

13. Cellule électrochimique selon l'une quelconque des revendications 1-12, dans laquelle la conductivité électronique du premier et/ou du second fluide électrochimiquement actif (110, 120) est d'au moins 10⁻⁵ S/cm, ou d'au moins 10⁻⁴ S/cm, ou d'au moins 10⁻³ S/cm,
dans laquelle la conductivité électronique est mesurée dans une configuration de plaques parallèles en utilisant un dispositif de mesure construit en utilisant des plaques en acier inoxydable de 3 mm × 10 mm avec un espacement de 1,6 mm entre les plaques, qui est connecté à l'analyseur FRA d'un système de test de cellules 1400, dans laquelle la conductivité est déterminée en faisant varier la fréquence d'un courant alternatif de 0,1 à 10⁶ Hz et en analysant le tracé de Nyquist résultant des parties imaginaires et réelles de la résistance.

14. Cellule électrochimique selon l'une quelconque des revendications 1-13, dans laquelle le premier et/ou le second fluide électrochimiquement actif (110, 120) comprend un semi-solide présentant un pourcentage en volume de phases solides de stockage d'ions compris entre 5 % et 70 %, ou au moins 70 %, ou au moins 75 % ou au moins 85 %.

15. Cellule électrochimique selon l'une quelconque des revendications 1-14, dans laquelle les premier et second fluides électrochimiquement actifs (110, 120) présentent une viscosité de cisaillement en régime permanent inférieure à 1,5 kPa.s (1,5×10⁶ cP), dans laquelle la viscosité est mesurée à l'intérieur d'une boîte à gants en utilisant un viscosimètre numérique Brookfield, mode DV-II+ Pro Extra et le montage expérimental consiste à faire varier le taux de cisaillement entre 5 et 35 sec⁻¹ par incréments de 5 sec⁻¹, dans laquelle pour chaque taux de cisaillement, 30 points de données pour la viscosité sont pris au cours d'une minute, et les données résultantes sont tracées en corrélant la viscosité au taux de cisaillement.

16. Cellule électrochimique selon la revendication 1, dans laquelle les parois (117, 118) incluent un matériau de confinement qui n'est pas électriquement conducteur.

17. Cellule électrochimique selon la revendication 1, dans laquelle la première électrode comprend un premier semi-solide comprenant un matériau actif de cathode comprenant une phosphor-olivine de métal de transition de lithium ou la seconde électrode comprend un second semi-solide comprenant un matériau actif d'anode comprenant un graphite.

18. Cellule électrochimique selon la revendication 1, dans laquelle au moins l'un des premier et/ou second compartiments d'électrode (112, 122) est configuré de sorte qu'un fluide électrochimiquement actif puisse s'écouler dans le compartiment.

19. Cellule électrochimique selon l'une quelconque des revendications 1-18, dans laquelle le semi-solide comprend un matériau actif d'électrode solide en suspension dans un électrolyte et l'électrolyte est choisi de sorte que le matériau actif d'électrode ne se dissout pas dans l'électrolyte pendant le fonctionnement de la cellule électrochimique.

20. Cellule électrochimique selon l'une quelconque des revendications précédentes, dans laquelle la cellule électrochimique comprend une batterie, et de préférence la batterie comprend une batterie rechargeable.
